(19) **Europäisches Patentamt**
**European Patent Office**
**Office européen des brevets**

(11) **EP 1 704 767 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**18.03.2015 Patentblatt 2015/12**

(51) Int Cl.:
***A01D 41/127*** *(2006.01)*

(45) Hinweis auf die Patenterteilung:
**26.03.2008 Patentblatt 2008/13**

(21) Anmeldenummer: **06000277.1**

(22) Anmeldetag: **09.01.2006**

(54) **Verfahren zur Ermittlung eines Ziel-Einstellwertes**

Method for determining an optimal setting

Méthode pour la sélection d'une valeur de préférence

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.03.2005 DE 102005014278**

(43) Veröffentlichungstag der Anmeldung:
**27.09.2006 Patentblatt 2006/39**

(73) Patentinhaber: **CLAAS Selbstfahrende Erntemaschinen GmbH 33428 Harsewinkel (DE)**

(72) Erfinder:
- **Behnke, Willi 33803 Steinhagen (DE)**
- **Baumgarten, Joachim, Dr. 48361 Beelen (DE)**
- **Neu, Sebastian 49196 Bad Laer (DE)**

(56) Entgegenhaltungen:
**DE-A1- 19 807 145      US-A1- 2003 066 277**
**US-A1- 2004 186 597      US-A1- 2004 259 610**
**US-B1- 6 205 384**

Printed by Jouve, 75001 PARIS (FR)

EP 1 704 767 B2

**Beschreibung**

Die Erfindung betrifft ein Verfahren zur Ermittlung eines an einen Ernteprozess angepassten Ziel-Einstellwertes für einen Steuerparameter eines Arbeitsaggregats einer Erntemaschine, insbesondere eines Mähdreschers. Die Erfindung betrifft des Weiteren ein Verfahren und eine entsprechende Steuereinrichtung zur Steuerung eines Arbeitsaggregats einer Erntemaschine sowie eine Erntemaschine mit einer solchen Steuereinrichtung, und ein Computerprogrammprodukt mit Programmcode-Mitteln, um alle Schritte des Verfahrens auszuführen, wenn das Programmprodukt in der Steuereinrichtung ausgeführt wird.

Moderne landwirtschaftliche Erntemaschinen, insbesondere selbstfahrende Erntemaschinen wie Mähdrescher, Feldhäcksler etc., verfügen zur Bearbeitung verschiedener Erntegüter über ein oder mehrere einstellbare Arbeitsaggregate. Dabei sind die einzelnen Aggregate bei modernen Erntemaschinen mit in der Regel aus der Fahrerkabine fernbedienbaren Stelleinrichtungen ausgestattet, mit denen verschiedene Steuerparameter der Arbeitsaggregate eingestellt werden können. Zu den typischen Arbeitsaggregaten eines Mähdreschers gehören beispielsweise das Dreschwerk, welches üblicherweise einen Dreschkorb und eine oder mehrere Dreschtrommeln aufweist, sowie eine dem Dreschwerk nachgeschaltete Reinigungseinrichtung, welche in der Regel ein Gebläse und mehrere Siebe umfasst. Unterschiedliche Erntegüter und Erntebedingungen wie Feuchtigkeit, Bestandshöhe, Bodenbeschaffenheit etc. erfordern, dass die einzelnen Aggregate bzw. deren einstellbare Steuerparameter möglichst genau an den individuellen laufenden Ernteprozess angepasst werden, um insgesamt ein optimales Arbeitsergebnis zu erzielen.

Trotz vieler Einstellhilfen, welche die Hersteller der Erntemaschinen den Bedienern anbieten - wie z. B. ausführliche Bedienerschulungen, Handlisten, aus denen der Bediener für verschiedene Erntesituationen vorgegebene Einstellwerte entnehmen kann, oder elektronische Hilfsmittel wie elektronische Bordinformationssysteme, von denen optimierte Einstellwertkombinationen für verschiedenste Erntesituationen zur Auswahl vorgegeben werden - ist es für die Bediener nach wie vor relativ schwierig, die Maschine so einzustellen, dass sie gemäß den gewünschten Vorgaben optimal arbeitet. Dies gilt vor allem für unerfahrene und/oder ungeübte Bediener, insbesondere zu Beginn einer Erntesaison. Daher kommt es in vielen Fällen vor, dass die Erntemaschine bzw. deren Arbeitsaggregate nicht optimal an den aktuellen Ernteprozess angepasst sind und vorhandene Ernteleistungskapazitäten der Maschine ungenutzt bleiben, schlechte Arbeitsergebnisse erzielt werden oder sogar unnötige Ernteverluste erzeugt werden.

Zur Lösung dieses Problems wird in der DE 101 47 733 A1 ein automatisches Verfahren zur Ermittlung einer an den Ernteprozess angepassten Einstellung einer landwirtschaftlichen Erntemaschine angegeben. Dabei wird jeweils nur ein Steuerparameter der Erntemaschine bei ansonsten gleicher Einstellung und unter gleichbleibenden Erntebedingungen variiert und anschließend anhand eines Vergleichs der Arbeitsergebnisse genau derjenige Einstellwert für den betreffenden Steuerparameter ausgewählt, der zu einem besseren Arbeitsergebnis geführt hat. Durch dieses Verfahren erkennen auch ungeübte Bediener relativ schnell, ob, wann und inwieweit der variierte Steuerparameter einen Einfluss auf das Arbeitsergebnis hat, und können für eine entsprechende Einstellung des Steuerparameters sorgen. Die Einstellung kann grundsätzlich auch automatisch erfolgen. Dabei können die Arbeitsergebniswerte insbesondere aufgezeichnet werden und anhand der aufgezeichneten Arbeitsergebnisse kann eine Beziehung zwischen dem variierten Einstellparameter und dem erzielten Arbeitsergebnis ermittelt werden. Anhand dieser Beziehung kann dann ein optimaler Einstellparameter gewählt werden, der zu dem besten Arbeitsergebnis führt.

Systembedingt ist es bei den meisten Arbeitsaggregaten von Erntemaschinen jedoch so, dass die Einstellung eines Steuerparameters Auswirkungen auf verschiedenste Arbeitsergebnisparameter hat. So werden beispielsweise durch die Einstellung einer Gebläsedrehzahl, bei der es sich um einen einzelnen Steuerparameter der Reinigungseinrichtung eines Mähdreschers handelt, nicht nur die Reinigungsverluste, sondern auch die Volumenüberkehr und die Kornüberkehr beeinflusst. Bei der Überkehr handelt es sich um die Erntegutbestandteile, welche zum Nachdreschen noch einmal zur Drescheinrichtung zurückgeführt werden. Dabei unterscheidet man zwischen der Volumenüberkehr, bei der es sich um die Gesamtmenge der Überkehr handelt, und der Kornüberkehr, welche den Kornanteil in der Volumenüberkehr betrifft. Die Reinigungsverluste sind dagegen die Kornanteile, die als Verlust mit den Nicht-Korn-Bestandteilen aus der Maschine getragen werden. Es ist sicherlich ein wesentliches Ziel der Einstellung, die Verluste möglichst gering zu halten. Da die Überkehr aber eine zusätzliche Belastung der Drescheinrichtung verursacht, sollte im Idealfall auch die Überkehrmenge minimal sein. Leider ist es jedoch nicht zwangsläufig so, dass bei einer Variation der Gebläsedrehzahl von einem bestimmten Punkt aus in eine bestimmte Richtung automatisch alle vorgenannten verschiedenen Arbeitsergebnisparameter wie Reinigungsverluste, Volumenüberkehr und Kornüberkehr verbessert werden, da die Minima der verschiedenen Arbeitsergebnisparameter nicht bei der gleichen Gebläsedrehzahl liegen. Dieses Beispiel trifft ebenso für andere Steuerparameter der Reinigungseinrichtung, wie beispielsweise die Obersiebweiteneinstellung und die Untersiebweiteneinstellung, aber auch für eine Vielzahl anderer Arbeitsaggregate und deren Steuerparameter zu. In den meisten Fällen sind die verschiedenen Arbeitsergebnisparameter nicht nur von einem Steuerparameter, sondern von einer Vielzahl von Steuerparametern abhängig, und umgekehrt wirkt sich die Verstellung eines Steuerparameters auf mehrere Arbeitsergebnisparameter aus.

Es ist daher eine Aufgabe der vorliegenden Erfindung, ein verbessertes Ziel-Einstellwerte-Ermittlungsverfahren sowie ein Verfahren und eine Steuereinrichtung zur Steuerung eines Arbeitsaggregats einer Erntemaschine zu schaffen, welche auch bei sehr komplexen Einstellabhängigkeiten eine möglichst sichere und einfache automatische Auswahl eines optimal an den jeweiligen Ernteprozess angepassten Ziel-Einstellwertes und somit eine optimierte Ansteuerung des Arbeitsaggregats erlauben.

Diese Aufgabe wird durch die Verfahren gemäß Patentanspruch 1 bzw. durch eine Steuereinrichtung gemäß Patentanspruch 19 gelöst.

Erfindungsgemäß werden dabei zur Ermittlung eines optimalen Ziel-Einstellwerts für einen bestimmten Steuerparameter zunächst für mehrere verschiedene Arbeitsergebnisparameter jeweils Arbeitsergebnis-Kennlinien in Abhängigkeit von den betreffenden Steuerparametern ermittelt. Der Ziel-Einstellwert des Steuerparameters wird dann basierend auf einer Kombination der ermittelten Arbeitsergebnis-Kennlinien bestimmt.

Durch die Kombination der Arbeitsergebnis-Kennlinien ist sichergestellt, dass auch bei sehr komplexen Abhängigkeiten der verschiedenen Arbeitsergebnisparameter von den betreffenden Steuerparametern jeweils ein für die aktuellen Erntebedingungen optimaler Ziel-Einstellwert gefunden wird, so dass die Maschine unter den gegebenen Bedingungen ein insgesamt optimales . Arbeitsergebnis erreicht.

In dem erfindungsgemäßen Verfahren zur Steuerung eines Arbeitsaggregats einer Erntemaschine wird dieser gemäß dem Vorgenannten ermittelte Ziel-Einstellwert als "Sollwert" für den betreffenden Steuerparameter verwendet, um das Arbeitsaggregat anzusteuern.

Eine entsprechende erfindungsgemäße Steuereinrichtung benötigt u. a. eine Anzahl von Messwerteingängen zur Erfassung von Arbeitsergebnis-Messwerten verschiedener Arbeitsergebnisparameter des Arbeitsaggregats. Darüber hinaus benötigt diese Steuereinrichtung eine Kennlinien-Berechnungseinrichtung zur Ermittlung von Arbeitsergebnis-Kennlinien für die verschiedenen Arbeitsergebnisparameter, welche jeweils auf einer Anzahl von bei verschiedenen Einstellwerten eines bestimmten Steuerparameters des Arbeitsaggregats erfassten Arbeitsergebnis-Messwerten des betreffenden Arbeitsergebnisparameters basieren. Weiterhin muss eine solche Steuereinrichtung eine Ziel-Einstellwerte-Ermittlungseinrichtung aufweisen, um einen an einen Ernteprozess angepassten Ziel-Einstellwert für den Steuerparameter, basierend auf einer Kombination der ermittelten Arbeitsergebnis-Kennlinien der verschiedenen Arbeitsergebnisparameter, zu ermitteln.

Schließlich benötigt die Steuereinrichtung einen Steuerparameterausgang, um das Arbeitsorgan auf Basis des ermittelten Ziel-Einstellwertes direkt anzusteuern oder zumindest die Einstellwerte des betreffenden Steuerparameters einem Bediener zur Auswahl für eine Ansteuerung anzubieten. Mit einer solchen Steuereinrichtung kann der jeweilige Steuerparameter optimal an die aktuellen Erntebedingungen automatisch angepasst werden, ohne dass der Bediener hierzu über umfangreiche Erfahrungen verfügen muss.

Eine solche Steuereinrichtung kann insbesondere in Form eines programmierbaren Mikroprozessors ausgebildet sein, wobei die Kennlinien-Berechnungseinrichtung und die Ziel-Einstellwerte-Ermittlungseinrichtung in Form von Software auf diesem Prozessor implementiert sind. Dabei ist es auch möglich, eine bereits vorhandene programmierbar ausgebildete Steuereinrichtung einer Erntemaschine durch entsprechende Implementierung solcher in Form von Softwaremodulen realisierten Einrichtungen erfindungsgemäß auszubilden, sofern diese Steuereinrichtung eine entsprechende Anzahl von Messwerteingängen zur Erfassung der benötigten Arbeitsergebnis-Messwerte und die entsprechenden Steuerparameterausgänge aufweist. Die erforderlichen Software-Komponenten bzw. alle erforderlichen Programmcode-Mittel können insbesondere im Rahmen eines Updates als Computerprogrammprodukt beispielsweise von einem Datenspeicher direkt in den Speicher der programmierbaren Steuereinrichtung geladen werden.

Die Unteransprüche enthalten jeweils besonders vorteilhafte Ausgestaltungen und Weiterbildungen der Erfindung, wobei das Verfahren zur Steuerung eines Arbeitsaggregats auch entsprechend dem Verfahren zur Ermittlung eines Ziel-Einstellwertes weitergebildet sein kann und umgekehrt. Ebenso kann auch die Steuereinrichtung entsprechend den abhängigen Verfahrensansprüchen weitergebildet sein.

Um eine Arbeitsergebnis-Kennlinie zu ermitteln, werden vorzugsweise bei einer Anzahl von verschiedenen Einstellwerten des Steuerparameters Arbeitsergebnis-Messwerte erfasst. An die Arbeitsergebnis-Messwerte in Abhängigkeit von den Einstellwerten wird dann eine mathematische Funktion angepasst, welche letztlich die Arbeitsergebnis-Kennlinie bildet.

Die Messwerterfassung kann dabei bevorzugt derart ablaufen, dass wechselweise bei hohen und niedrigen Einstellwerten des jeweiligen Steuerparameters gemessen wird. Auf diese Weise kann vermieden werden, dass sich durch einen längeren Betrieb in einem bestimmten Arbeitsbereich des Steuerparameters systematische Messfehler ausbilden und aufaddieren. Zudem wird dadurch ein eventuelles Überlasten der Aggregate vermieden, wenn beispielsweise Arbeitsergebnis-Messwerte in einem Extrem-Arbeitsbereich des Steuerparameters erfasst werden müssen.

Die Anzahl und die Streuung der Messwerte, d. h. über welchen Arbeitsbereich die Einstellwerte des Steuerparameters zur Aufnahme der Messwerte variieren, hängt von den Umständen der jeweiligen Messung, der Art des Steuerparameters, der Art des Arbeitsergebnisparameters sowie ggf. der anzupassenden mathematischen Funktion - insbesondere eventuelles Vorwissen über die zu erwartende Kennlinie - ab. Beispielsweise kann eine feste Anzahl von Einstellwerten vorgegeben werden. Ebenso kann auch vorgegeben werden, dass genau bestimmte Einstellwerte des Steuerparameters zur Erfassung der Arbeitsergebnis-Messwerte anzufahren sind. Ebenso ist es auch möglich, die Anzahl und die Lage der Einstellwerte in Abhängigkeit von aktuellen Bedingungen und/oder auf Basis von Vorwissen aus vorhergehenden Optimierungszyklen etc. speziell für die aktuelle Ermittlung des Ziel-Einstellwertes auszuwählen. Hierbei ist zu berücksichtigen, dass eine große Varianz, d. h. ein möglichst breiter Variationsbereich des Steuerparameters, den Vorteil hat, dass das Bestimmtheitsmaß, mit welcher Sicherheit eine mathematische Funktion ermittelt werden kann, die die reale Kennlinie möglichst genau beschreibt, vergrößert wird. Andererseits hat eine Messung in einem kleinen Variationsbereich den Vorteil, dass die Messzeit verkürzt wird und es - sofern beispielsweise als Arbeitsergebnisse Verluste gemessen werden müssen - nicht erforderlich ist, während der Messung in extremen Verlustbereichen zu arbeiten. Es werden dann durch das erfindungsgemäße Verfahren zur Ermittlung des Einstellwertes geringere Verluste während des Optimierungsprozesses selbst erzeugt.

Zur Ermittlung einer mathematischen Funktion, welche an die Arbeitsergebnis-Messwerte angepasst ist, können je nach Art der Streuung der Arbeitsergebnis-Messwerte und der zu erwartenden Kurvenform verschiedenste Fit-Verfahren verwendet werden. Hierbei kann darauf geachtet werden, dass in irgendeiner Form die Abweichungen der Messwerte von der Kurve minimiert werden, aber "Ausreißer" in den Messwerten nicht zu stark ins Gewicht fallen.

Bei einem besonders bevorzugten Ausführungsbeispiel werden die Arbeitsergebnis-Messwerte hierzu einer Regressionsanalyse unterworfen. Um eine lineare Abhängigkeit des Arbeitsergebnis-Messwertes vom Steuerparameter zu beschreiben, kann beispielsweise ein lineares Regressionsverfahren genutzt werden, um eine parabelförmige Abhängigkeit zu beschreiben, eine quadratische Regression. Damit eine physikalisch sinnvolle Aussage getroffen werden kann, sollten bei einer quadratischen Regression mindestens vier Messwerte genommen werden. Besonders bevorzugt werden jedoch Arbeitsergebnis-Messwerte bei fünf verschiedenen Einstellwerten des Steuerparameters aufgezeichnet. Dies ist ein sehr guter Kompromiss zwischen einer Minimierung der Messzeit und der notwendigen Anzahl von Messpunkten, um eine aussagekräftige parabolische Arbeitsergebnis-Kennlinie zu erzeugen.

Vorzugsweise werden gleichzeitig sämtliche Arbeitsergebnis-Messwerte für verschiedene Arbeitsergebnisparameter in Abhängigkeit von dem variierten Steuerparameter ermittelt. Das heißt, es wird beispielsweise der Steuerparameter auf einen bestimmten Mess-Einstellwert eingestellt und es werden dann parallel für sämtliche davon abhängigen Arbeitsergebnisparameter die Arbeitsergebnis-Messwerte erfasst. Auf diese Weise wird die Messzeit erheblich verringert. Grundsätzlich kann jedoch - sofern dies aus bestimmten Gründen im Einzelfall sinnvoll wäre - auch eine unabhängige Messung aller Arbeitsergebnisparameter erfolgen.

Vorzugsweise kann bei der Ermittlung eines Ziel-Einstellwertes ein beispielsweise vom Bediener vorgegebener Vorgabewert berücksichtigt werden. Damit kann vom Bediener der Erntemaschine eingegeben werden, ob für den laufenden Ernteprozess ein bestimmter Arbeitsergebnisparameter wichtiger als andere Arbeitsergebnisparameter ist. Zum Beispiel kann auch bei einer Einstellung einer Reinigungseinrichtung eines Mähdreschers eine Wahlmöglichkeit zwischen den Vorgaben "erhöhte Sauberkeit" oder "erhöhte Reinigungsleistung" vorgesehen sein. Es kann dann, wenn durch den Vorgabewert eine erhöhte Sauberkeit gewählt wird, beispielsweise eine engere Siebstellung als Ziel-Einstellwert gewählt werden. Wenn dagegen eine erhöhte Reinigungsleistung gefordert wird, wird eine etwas weitere Sieböffnung als Ziel-Einstellwert gewählt.

Zur Bestimmung des Ziel-Einstellwertes auf Basis einer Kombination der ermittelten Arbeitsergebnis-Kennlinien gibt es verschiedenste Möglichkeiten.

Bei einem bevorzugten Ausführungsbeispiel wird zunächst separat für jede der Arbeitsergebnis-Kennlinien ein kennlinienspezifischer Ziel-Einstellwert oder kennlinienspezifischer Ziel-Einstellbereich, z. B. ein Bereich unter- oder oberhalb eines bestimmten durch die Kennlinie ermittelbaren Schwellenwerts, ermittelt. Diese kennlinienspezifischen Ziel-Einstellwerte bzw. Ziel-Einstellbereiche werden dann in geeigneter Weise miteinander verknüpft.

Es werden zur Bestimmung des Ziel-Einstellwertes des Steuerparameters die Extrema und/oder Wendepunkte der Arbeitsergebnis-Kennlinien ermittelt und gemäß einer vorgegebenen Regel verknüpft. D. h., die kennlinienspezifischen Ziel-Einstellwerte bzw. Ziel-Einstellbereiche werden hier durch die Extrema und/oder Wendepunkte definiert.

Bei Reinigungsverlust-Kennlinien, Überkehr-Kennlinien oder Kennlinien von anderen Arbeitsergebnisparametern, bei denen es darum geht, die gemessenen Werte möglichst gering zu halten, werden beispielsweise die Minima der Arbeitsergebnis-Kennlinie ermittelt und gemäß einer vorgegebenen Regel verknüpft. Bei Arbeitsergebnisparametern, bei denen es darum geht, möglichst hohe Ergebnisse zu erzielen, z. B. bei der Fördermenge, können die Maxima der jeweiligen Arbeitsergebnis-Kennlinien verwendet werden.

Eine solche Verknüpfung kann beispielsweise erfolgen, indem ein Mittelwert aus den Extrema bzw. Wendepunkten der Arbeitsergebnis-Kennlinien gebildet wird. Ebenso ist auch eine gewichtete Mittelwertbildung möglich.

Bei einer Verknüpfung, z. B. vor der Mittelwertbildung, werden das Extremum und/oder der Wendepunkt zumindest einer der Arbeitsergebnis-Kennlinien mit einem Offset-Wert beaufschlagt, wobei durch einen solchen Offset-Wert auch eine Gewichtung verschiedener Kennlinien zueinander erfolgt. Dieser Offset-Wert kann beispielsweise derart gewählt werden, dass systematische Fehler, die z. B. aufgrund der Lage von Sensoren, mit denen die Arbeitsergebnis-Messwerte ermittelt werden, oder aus anderen Gründen unvermeidbar vorgegeben sind, wieder kompensiert werden.

Insbesondere kann ein solcher Offset-Wert auch in Abhängigkeit von dem vom Bediener voreingestellten Vorgabewert gewählt werden, um so einen Ziel-Einstellwert zu erhalten, welcher der Vorgabe - beispielsweise bei einer Reinigungseinrichtung der gewünschten erhöhten Sauberkeit oder erhöhten Reinigungsleistung - entspricht.

Der Offset-Wert kann dabei vorzugsweise in Abhängigkeit von einer Steilheit der Arbeitsergebnis-Kennlinie in dem jeweiligen Bereich gewählt werden. Auf diese Weise kann berücksichtigt werden, wie sich die Verwendung des Offsets auf das jeweilige Arbeitsergebnis auswirkt.

Alternativ zu der vorgenannten Verknüpfung von Extrema oder Wendepunkten ist es - wie bereits kurz erwähnt - auch (in nicht erfindungsgemässer Weise) möglich, anhand einer ersten Arbeitsergebnis-Kennlinie beispielsweise einen Schwellenwert festzulegen und diesen Schwellenwert bei einer Bestimmung des Ziel-Einstellwertes anhand einer zweiten Arbeitsergebnis-Kennlinie ergänzend einzusetzen. Der Ziel-Einstellwert hängt dann in erster Linie von der zweiten Arbeitsergebnis-Kennlinie ab, liegt aber nicht oberhalb bzw. unterhalb des durch die erste Arbeitsergebnis-Kennlinie vorgegebenen Schwellenwertes.

Wenn das Arbeitsaggregat eine Reinigungseinrichtung umfasst bzw. sofern es sich bei dem Arbeitsaggregat um eine solche Reinigungseinrichtung handelt, werden als Arbeitsergebnis-Kennlinien vorzugsweise Abscheidekennlinien für die Reinigungsverluste und/oder die Kornüberkehr und/oder die Volumenüberkehr ermittelt. Es wird dann bevorzugt die Gebläsedrehzahl und/oder die Obersieböffnungsweite der Reinigungseinrichtung jeweils auf Basis aller drei Abscheidekennlinien eingestellt. Die Untersieböffnungsweite der Reinigungseinrichtung wird dagegen vorzugsweise nur auf Basis der Abscheidekennlinien für die Kornüberkehr und die Volumenüberkehr eingestellt.

Da insbesondere bei Arbeitsaggregaten wie einem Dreschwerk und/oder einer Reinigungseinrichtung die Arbeitsergebnis-Messwerte stark vom Durchsatz abhängen und dieser wiederum in erster Linie von der Bestandsmenge und der Fahrgeschwindigkeit, werden zur Erfassung eines möglichst eindeutigen Arbeitsergebnis-Messwertes diese Erntebedingungen über einen vorgegebenen Messzeitraum innerhalb eines bestimmten Toleranzbereiches konstant gehalten. Vorzugsweise wird daher dafür gesorgt, dass der Fahrer nach dem Start der Messung die Geschwindigkeit über den Messzeitraum möglichst konstant hält. Grundsätzlich kann aber auch ein automatisches Verfahren zur Konstanthaltung der Erntebedingungen vorgesehen sein.

Vorteilhafterweise wird eine Messung eines Arbeitsergebnis-Messwertes automatisch unterbrochen, wenn die Erntemaschine aus einem Erntebestand herausfährt, und nach einem Hereinfahren in den Erntebestand automatisch wieder gestartet. Verschiedene Möglichkeiten, die Erntebedingungen über den vorgegebenen Messzeitraum möglichst konstant zu halten und bei Herausfahren aus dem Erntebestand automatisch zu unterbrechen bzw. nach dem Hereinfahren wieder zu starten, werden später noch detaillierter beschrieben.

Die erfindungsgemäß ermittelten Ziel-Einstellwerte werden wie oben erwähnt in einem erfindungsgemäßen Verfahren zur automatischen Steuerung eines Arbeitsaggregats der Erntemaschine verwendet, indem das Arbeitsaggregat auf Basis des ermittelten Ziel-Einstellwertes angesteuert wird.

Dabei werden vorzugsweise nacheinander Ziel-Einstellwerte für verschiedene Steuerparameter des Arbeitsaggregats ermittelt, wobei zunächst nach einer Ermittlung eines ersten Ziel-Einstellwertes für einen ersten Steuerparameter das Arbeitsaggregat auf Basis des ermittelten Ziel-Einstellwertes angesteuert wird. Dann wird ein weiterer Ziel-Einstellwert für einen weiteren Steuerparameter des Arbeitsorgans ermittelt und ebenfalls eingestellt. Dieses Verfahren wird solange fortgesetzt, bis schließlich alle Steuerparameter optimal eingestellt sind. Anstelle einer sofortigen automatischen Ansteuerung des Arbeitsaggregats mit dem ermittelten Ziel-Einstellwert kann dieser auch zunächst dem Bediener z. B. auf einem Display zur Auswahl angeboten werden. Der Bediener kann dann den Wert z. B. durch Eingabe eines Bestätigungsbefehls übernehmen.

Sofern mit dem erfindungsgemäßen Verfahren eine Reinigungseinrichtung angesteuert wird, wird vorzugsweise in einem ersten Schritt ein Ziel-Einstellwert für eine Gebläsedrehzahl, dann in einem zweiten Schritt ein Ziel-Einstellwert für die Obersieböffnungsweite und in einem dritten Schritt schließlich ein Ziel-Einstellwert für eine Untersieböffnungsweite der Reinigungseinrichtung ermittelt. Bevorzugt werden dann jeweils die Komponenten sofort mit dem ermittelten Ziel-Einstellwert angesteuert.

Als Start-Einstellwerte für eine solche Optimierung werden vorzugsweise fruchtabhängige Einstellwerte gewählt, die von den Herstellern der Erntemaschine für bestimmte Erntegüter bei bestimmten Erntebedingungen vorgegeben sind oder vom Betreiber der Erntemaschine unter ähnlichen Bedingungen für das betreffende Erntegut zuvor ermittelt wurden. Insbesondere können als Start-Einstellwerte in einem elektronischen Bordinformationssystem der Erntemaschine hinterlegte, fruchtartabhängige Einstellwerte verwendet werden. Bei der Optimierung werden zunächst diese Start-Einstellwerte für die verschiedenen Steuerparameter eingestellt. Es wird dann ein erster der Steuerparameter variiert und es werden die zugehörigen Messwerte aufgezeichnet und erfindungsgemäß ein optimaler Einstellwert für diesen Steuerparameter gefunden. Anschließend wird auf diese Weise ein zweiter Steuerparameter optimiert usw., bis alle gewünschten Steuerparameter optimiert sind. Welche Steuerparameter optimiert werden, kann vom Bediener bestimmt werden. Im Normalfall werden - soweit möglich - alle Steuerparameter optimiert.

Vorzugsweise kann nach einer bestimmten Zeitspanne und/oder bei Eintritt eines vorgegebenen Ereignisses ein neuer Ziel-Einstellwert für einen Steuerparameter des Arbeitsaggregats ermittelt und das Arbeitsaggregat auf Basis des neuen Einstellwertes angesteuert werden. Dabei ist es grundsätzlich auch möglich, dass beispielsweise, wie vorbeschrieben, eine ganze Kette von Ziel-Einstellwerten für verschiedene Steuerparameter des Arbeitsaggregats neu ermittelt wird.

Die bestimmte Zeitspanne kann dabei so gewählt werden, dass eine Optimierung immer dann erfolgt, wenn damit zu rechnen ist, dass die Erntebedingungen sich geändert haben. Beispielsweise kann bei einem Ernteprozess, welcher über einen ganzen Tag dauert, morgens, mittags und abends eine Neuoptimierung erfolgen, weil sich im Lauf des Tages die Strohfeuchte im Erntegut geändert haben könnte.

Bei den Ereignissen, welche zu einer Neuoptimierung der Ziel-Einstellwerte führen könnten, kann es sich insbesondere um eine Durchsatzänderung handeln, z. B. wenn mit einer anderen Erntegeschwindigkeit als bei der Ermittlung der Ziel-Einstellwerte geerntet wird. Ebenso kann das Ereignis eine Änderung eines Steuerparameters eines anderen Arbeitsaggregats der Erntemaschine sein. So ist beispielsweise davon auszugehen, dass sich die Reinigungsbelastung in einem Mähdrescher erheblich ändert, wenn das Dreschwerk in einem stärkeren Maße umgestellt wurde. Ebenso können Ereignisse durch weitere Messsensoren vorgegeben sein, so dass beispielsweise erntegutabhängig, d. h. wenn eine geänderte Guteigenschaft wie z. B. die Kornfeuchte gemessen wird, eine Neuermittlung von Ziel-Einstellwerten erfolgt.

Beim Start einer Neuermittlung der Ziel-Einstellwerte, d. h. für den wiederholten Start der Optimierung, werden als Voreinstellung bei der Messung bevorzugt die bereits bei der vorhergehenden Optimierung ermittelten Ziel-Einstellwerte verwendet.

Die Erfindung wird im Folgenden unter Hinweis auf die beigefügten Figuren anhand eines Ausführungsbeispiels noch einmal näher erläutert. Es zeigen:

Figur 1 einen schematischen Querschnitt durch einen Mähdrescher,

Figur 2 eine schematische Darstellung einer Steuereinrichtung zur Ansteuerung einer Reinigungsvorrichtung eines Mähdreschers mit einem angeschlossenen Bedienerterminal mit einer Benutzeroberfläche in einem ersten Prozesszustand,

Figur 3 eine Darstellung der Benutzeroberfläche des Bedienerterminals gemäß Figur 2 in einem zweiten Prozesszustand,

Figur 4 eine Darstellung der Benutzeroberfläche des Bedienerterminals gemäß Figur 2 in einem dritten Prozesszustand,

Figur 5 ein Flussdiagramm eines möglichen Ablaufs einer Optimierung der Reinigungseinrichtung eines Mähdreschers,

Figur 6 ein Diagramm zur Darstellung eines möglichen Ablaufs bei der Optimierung eines der Steuerparameter innerhalb eines Verfahrensablaufs gemäß Figur 5,

Figur 7 ein Flussdiagramm zur Ermittlung eines optimierten Ziel-Einstellwerts für einen Steuerparameter einer Reinigungseinrichtung,

Figur 8 ein Diagramm zur Darstellung der Ermittlung von Arbeitsergebnis-Kennlinien auf Basis von Arbeitsergebnis-Messwerten,

Figur 9 ein Diagramm zur Darstellung der Auffindung eines optimalen Ziel-Einstellwerts für die Gebläsedrehzahl einer Reinigungseinrichtung,

Figur 10 ein Diagramm zur Darstellung der Auffindung eines optimalen Ziel-Einstellwerts für die Obersieböffnungsweite,

Figur 11 ein Diagramm zur Darstellung der Auffindung eines optimalen Ziel-Einstellwerts für die Untersieböffnungsweite.

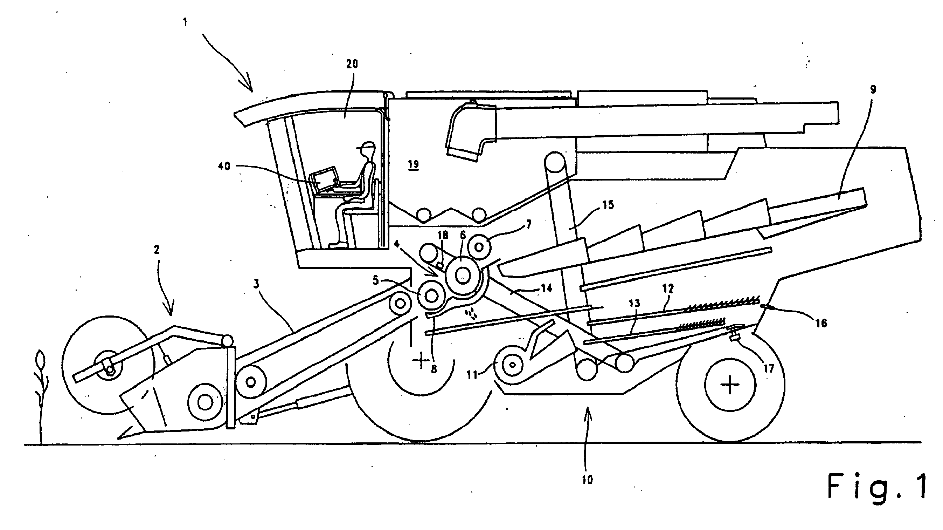

Bei dem in Figur 1 gezeigten Ausführungsbeispiel der Erfindung handelt es sich um einen selbstfahrenden Mähdrescher 1 mit einem sog. Tangential- oder auch Querflussdreschwerk 4 und mehreren dahinter angeordneten Schüttlern 9 als Abscheideeinrichtung. Hierbei handelt es sich um mehrere Hordenschüttler 9 mit mehreren Schüttlerfahrstufen. Unterhalb der Schüttler 9 befindet sich eine Reinigungseinrichtung 10, bestehend aus mehreren übereinander angeordneten Sieben 12, 13 und einem Gebläse 11.

Die Arbeitsweise eines solchen Mähdreschers 1 wird nachfolgend beschrieben:

Das Erntegut wird zunächst mittels einer Haspel des Mähtischs auf die Mäheinrichtung 2 gelegt und von Mähmessern abgeschnitten. Das Erntegut wird dann über eine Einzugsschnecke und einen Schrägförderer in einem Einzugskanal 3 zum Eingang des Dreschwerks 4 transportiert.

Am Eingang des Dreschwerks 4 befinden sich eine Einlege- bzw. Vorbeschleunigertrommel 5 und dahinter in Gutflussrichtung eine Dreschtrommel 6 mit einer quer zur Gutflussrichtung - d. h. quer zur Mähdrescherlängsachse - liegenden Rotationsachse. Unterhalb der Dreschtrommel 6 befindet sich ein passend geformter Dreschkorb 8. Das aus dem Einzugskanal 3 kommende Erntegut wird durch die Vorbeschleunigertrommel 5 erfasst und dann weiter von der Dreschtrommel 6 durch den zwischen der Dreschtrommel 6 und dem Dreschkorb 8 befindlichen Dreschspalt gezogen. Dabei wird durch die Dreschleisten der Dreschtrommel 6 das Erntegut gedroschen, d. h. geschlagen und/oder zerrieben, wobei ein Korn-Spreu-Gemisch durch den Dreschkorb 8 nach unten fällt, welches dann der Reinigungseinrichtung 10 zugeführt wird, um die Körner von den Beimengungen, d. h. von Halm- und Spreuteilen, zu trennen.

Vom Dreschwerk 4 wird der gedroschene Gutstrom über die Wendetrommel 7 auf den Hordenschüttler 9 gelenkt, durch den die noch im Gutstrom befindlichen Körner sowie evtl. Kurzstroh und Spreu abgetrennt werden. Die Körner, das Kurzstroh und die Spreu gelangen dann ebenfalls in die Reinigungseinrichtung 10, in welcher die Körner von Kurzstroh und Spreu getrennt werden.

Die Reinigung der Körner von den Nicht-Korn-Bestandteilen (auch "Kaff" genannt) in der Reinigungseinrichtung 10 erfolgt in der Weise, dass durch die Sieböffnungen (Löcher, Maschen, Schlitze) in den schwingend angetriebennen Sieben 12, 13 mittels des Gebläses 11 Wind hindurchgeblasen wird, welcher das über die Siebe 12, 13 geführte Erntegut auflockert und für das Heraustrennen der spezifisch leichteren Spreu- und Kurzstrohanteile sorgt, während die schweren Erntegutkörner durch die Sieböffnungen fallen. Hierbei sind ein Obersieb 12 und ein Untersieb 13 bereichsweise übereinander angeordnet, so dass das Erntegut in verschiedenen Stufen unterschiedlich fein gesiebt wird.

Die Körner, welche durch beide Siebe 12, 13 der Reinigungseinrichtung 10 gelangt sind, fallen auf einen ersten Auffang- und Führungsboden und werden einer Kornförderschnecke zugeführt. Sie werden dann von einem Elevator 15 in einen Korntank 19 des Mähdreschers 1 befördert und können dort bei Bedarf mit einem Tankentleerförderer auf einen Transportwagen umgeladen werden.

Die Teilchen, die in der Reinigungsvorrichtung 10 erst am hinteren Ende durch die Sieböffnungen des Obersiebs 12 fallen, sind in der Regel schwerere Teilchen, d. h. Teilchen, welche ein Korn enthalten, das sich aber nicht vollständig von anderen Bestandteilen des Getreides gelöst hat. Diese Teilchen fallen hinteren dem Untersieb 13 auf einen zweiten Auffang- und Führungsboden, welcher unterhalb und etwas hinter dem ersten Auffang- und Führungsboden angeordnet ist, und werden als sogenannte Überkehr über einen Überkehrelevator 14 noch einmal zum Dreschwerk 4 zurückgeführt.

Bestandteile, die nicht durch das Obersieb 12 fallen, werden als Verlust ausgeworfen. Ebenso wandern das Stroh sowie ein bestimmter Prozentsatz an Verlustkörnern über den Hordenschüttler 9 zum hinteren Ende des Mähdreschers 1 und werden dort ausgeworfen.

Bei dem folgenden Ausführungsbeispiel wird davon ausgegangen, dass erfindungsgemäß für verschiedene Steuerparameter SG, SO, SU dieser Reinigungseinrichtung 10 eines Mähdreschers, beispielsweise für die Obersieböffnungsweite, die Untersieböffnungsweite und die Gebläsedrehzahl Ziel-Einstellwerte ZG, ZO, ZU ermittelt werden sollen. Für die Einstellung einer solchen Reinigungseinrichtung 10 hat sich das erfindungsgemäße Verfahren bereits bewährt und kann daher besonders vorteilhaft eingesetzt werden. Grundsätzlich kann das erfindungsgemäße Verfahren bzw. eine entsprechende Steuereinrichtung aber auch zur Einstellung anderer Arbeitsaggregate wie beispielsweise die Drehzahl der Dreschtrommel oder der Korbweite des Dreschkorbs an einer anderen beliebigen Erntemaschine verwendet werden. Außerdem wird der Vollständigkeit halber darauf hingewiesen, dass die Erfindung auch sehr gut zur Steuerung von Reinigungseinrichtungen anderer Mähdreschertypen eingesetzt werden kann.

Um für die verschiedenen Steuerparameter SG, SO, SU der Reinigungseinrichtung 10 an den Ernteprozess angepasste Ziel-Einstellwerte ZG, ZO, ZU zu ermitteln, müssen verschiedene Arbeitsergebnis-Messwerte MR, MK, MV für unterschiedliche Arbeitsergebnisparameter gemessen und auf Basis dieser Arbeitsergebnis-Messwerte MR, MK, MV Arbeitsergebnis-Kennlinien KR, KK, KV ermittelt werden.

Bei dem dargestellten Ausführungsbeispiel werden als Arbeitsergebnisparameter, die in die Ermittlung der Ziel-Einstellwerte für die verschiedenen Steuerparameter eingehen, zum einen die Reinigungsverluste und zum anderen die Volumenüberkehr sowie die Kornüberkehr beobachtet. Bei der Kornüberkehr handelt es sich um die Kornbestandteile innerhalb der Volumenüberkehr.

Hierzu befinden sich im Mähdrescher an verschiedenen Stellen unterschiedliche Messeinrichtungen 16, 17, 18.

Zum Messen der Reinigungsverluste befindet sich direkt unterhalb des hinteren Endes des Obersiebs 12 eine Reinigungsverlust-Messeinrichtung 16, welche üblicherweise als Klopfsensor aufgebaut ist. Das von diesem Klopfsensor 16 erfasste Signal ist ein Maß dafür, wie viele Bestandteile hinter dem Obersieb 12 unmittelbar nach unten fallen. Daraus lässt sich der Gesamtverlust relativ gut einschätzen.

Die Volumenüberkehr wird mit Hilfe einer Volumenüberkehr-Messeinrichtung 18 gemessen, die sich im Überkehrelevator 14 befindet und dort die transportierte Gesamtmenge, beispielsweise anhand des vom Überkehrelevator 14 transportierten Gewichts oder durch optische und/oder kapazitive Messungen etc., misst. Der Kornanteil innerhalb der Volumenüberkehr, d. h. die Kornüberkehr, wird mit einer Kornüberkehr-Messeinrichtung 17 gemessen, welche auf dem zweiten Auffang- und Führungsboden hinter dem Untersieb 13 angeordnet ist. Auch hierbei handelt es sich vorzugsweise um einen Klopfsensor, dessen Ausgangssignal ein Maß für die hinter dem Untersieb 13 in die Überkehr fallenden Körner ist.

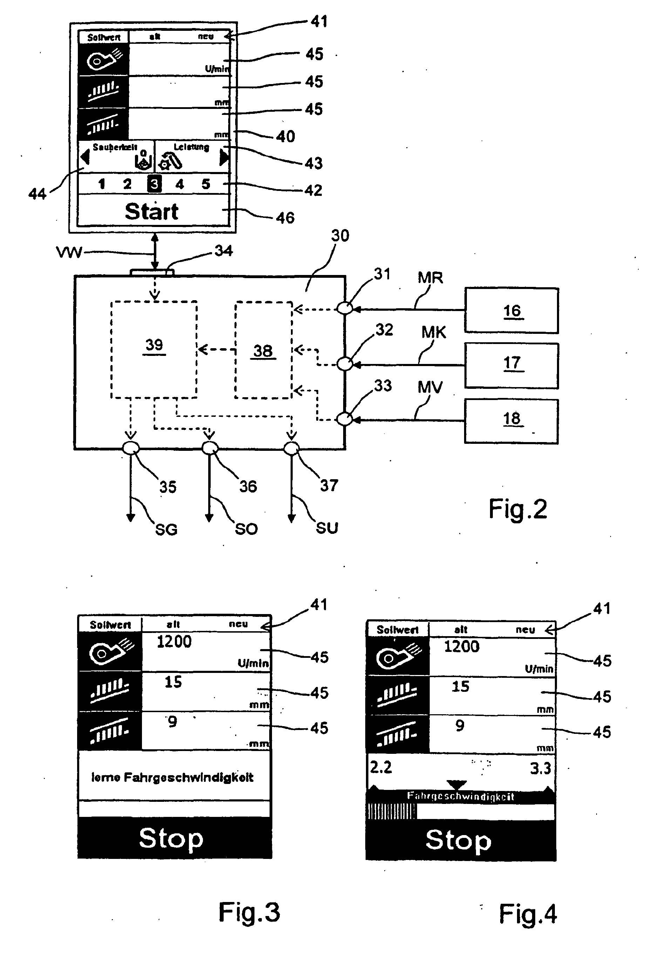

All diese Messeinrichtungen 16, 17, 18 sind mit einer Steuereinrichtung 30 verbunden. An diese Steuereinrichtung 30 ist außerdem ein Bedienerterminal 40 angeschlossen, welches ein Display mit einer Benutzeroberfläche 41 aufweist, mit der ein Fahrer die Steuereinrichtung 30 bedienen bzw. programmieren kann. Dieses Bedienerterminal 40 befindet sich innerhalb der Fahrerkabine 20. Die Verbindung der einzelnen Messeinrichtungen 16, 17, 18 und des Bedienerterminals 40 mit der Steuereinrichtung 30 sowie die Steuereinrichtung 30 selbst sind der Übersichtlichkeit wegen in Figur 1 nicht dargestellt. Stattdessen findet sich eine etwas detailliertere Darstellung in Figur 2, auf die für die weiteren Erläuterungen verwiesen wird.

Die Steuereinrichtung 30 weist hier drei Messwerteingänge 31, 32, 33 auf, an welche die Messeinrichtungen 16, 17, 18 angeschlossen sind. Von der Reinigungsverlust-Messeinrichtung 16 werden Reinigungsverlust-Messwerte MR zum Eingang 31 der Steuereinrichtung 30 geleitet, von der Kornüberkehr-Messeinrichtung 17 werden Kornüberkehr-Messwerte MK zum Eingang 32 der Steuereinrichtung 30 geleitet und von der Volumenüberkehr-Messeinrichtung 18 werden Volumenüberkehr-Messwerte MV zum Eingang 33 der Steuereinrichtung 30 geleitet.

Die Steuereinrichtung 30 weist außerdem drei Steuerparameter-Ausgänge 35, 36, 37 auf, über welche die Einstellwerte für die Steuerparameter "Gebläsedrehzahl" SG, "Obersiebweiteneinstellung" SO und "Untersiebweiteneinstellung" SU an die jeweiligen Komponenten der Reinigungseinrichtung 10 als Sollwerte übergeben werden. Über entsprechende (nicht dargestellte) Sensoren kann von der Steuereinrichtung 30 geprüft werden, ob die gewünschten Einstellwerte auch tatsächlich erreicht werden.

Über eine Terminalschnittstelle 34 ist das Bedienerterminal 40 an der Steuereinrichtung 30 angeschlossen. Dieses Bedienerterminal 40 ist hier als sog. Touchpad aufgebaut, bei dem der Bediener durch Druck auf bestimmte Bereiche der Benutzeroberfläche 41 bestimmte Eingabebefehle gibt.

Im oberen Bereich der Benutzeroberfläche 41 sind hier untereinander drei Einstellwert-Anzeigefelder 45 für die Gebläsedrehzahl, die Obersiebeinstellung und die Untersiebeinstellung (von oben nach unten) dargestellt. Auf diesen Einstellwert-Anzeigefeldern 45 werden im Betrieb jeweils für die einzelnen Komponenten der ursprünglich eingestellte Wert des Steuerparameters SG, SO, SU sowie der neue Ziel-Einstellwert ZG, ZO, ZU angezeigt.

Darunter befinden sich zwei Vorgabefelder 43, 44. Durch Drücken dieser Vorgabefelder 43, 44 kann der Bediener einen Vorgabewert VW wählen, der an die Steuereinrichtung 30 übergeben wird. Der Vorgabewert VW wird in einer Vorgabewert-Anzeige 42 unmittelbar unter den Vorgabefeldern 43 angezeigt. Drückt der Bediener das linke Vorgabefeld 44, so wird der Vorgabewert VW verringert, was dazu führt, dass im Optimierungsverfahren dafür gesorgt wird, dass tendenziell eher auf eine "erhöhte Sauberkeit" im Ernteprozess geachtet wird und die Reinigungsleistung etwas in den Hintergrund rückt. Umgekehrt wird, wenn der Bediener auf das rechte Vorgabefeld 43 drückt, der Vorgabewert VW erhöht, so dass die Optimierung auf Kosten der Sauberkeit stärker das Kriterium "erhöhte Reinigungsleistung" berücksichtigt.

Unter der Vorgabewert-Anzeige 42 befindet sich ein Startfeld 46. Durch Berühren dieses Startfeldes 46 kann der Optimierungsprozess gestartet werden.

Es wird an dieser Stelle darauf hingewiesen, dass die Benutzeroberfläche 41 selbstverständlich auch in völlig anderer Form ausgestaltet sein kann. Insbesondere kann sie auch Teil eines größeren Bedienerterminals 40 sein, auf dem noch weitere Bereiche zur Einstellung anderer Komponenten sowie weitere Informationen für den Bediener angezeigt werden. Ebenso ist es möglich, anstelle eines Touchpads auch eine andere Form von Benutzerschnittstelle zu verwenden.

Die Steuereinrichtung 30 ist hier in Form eines programmierbaren Mikroprozessors ausgebildet, auf dem für die Erfindung wesentliche Komponenten wie beispielsweise eine Kennlinien-Berechnungseinrichtung 38, welche aus den Eingangssignalen MR, MK, MV jeweils Arbeitsergebnis-Kennlinien KR, KK, KV berechnet, und eine Ziel-Einstellwert-Ermittlungseinrichtung 39, welche aus den Kennlinien KR, KK, KV und dem über das Bedienerterminal 40 eingestellten Vorgabewert VW jeweils die Ziel-Einstellwerte für die verschiedenen Steuerparameter SG, SO, SU berechnet, in Form von SoftwareModulen implementiert sind.

In Figur 2 ist eine Steuereinrichtung 30 dargestellt, welche nur zur Steuerung der Reinigungseinrichtung 10 dient. Es ist klar, dass eine solche Steuereinrichtung 30 auch andere Arbeitsaggregate, beispielsweise das Dreschwerk des Mähdreschers 1, ansteuern kann bzw. dass die Steuereinrichtungen für die verschiedensten Arbeitsaggregate in Form von Mödülen in einer Gesamt-Steuereinrichtung des Mähdreschers 1 angeordnet sein können. Weiterhin ist klar, dass eine solche Steuereinrichtung auch noch weitere Messwerteingänge und Steuerparameter-Ausgänge aufweisen kann. Beispielsweise kann der Mähdrescher 1 noch Sensoren zur Messung der Schichthöhe des Ernteguts im Einzugskanal und/oder weitere Sensoreinrichtungen im Korntank bzw. am Ausgang des Kornelevators aufweisen, wie ein Ertragsmessgerät zur Bestimmung der Gesamtkörnermenge oder Kornbruchdetektoren, mit denen beschädigte bzw. gebrochene Körner nachgewiesen werden können, oder auch Sensoren am Ende der Hordenschüttler zur Bestimmung der Schüttlerverluste.

All diese Komponenten sind aber der Übersichtlichkeit wegen in dem Ausführungsbeispiel gemäß Figur 2 nicht dargestellt.

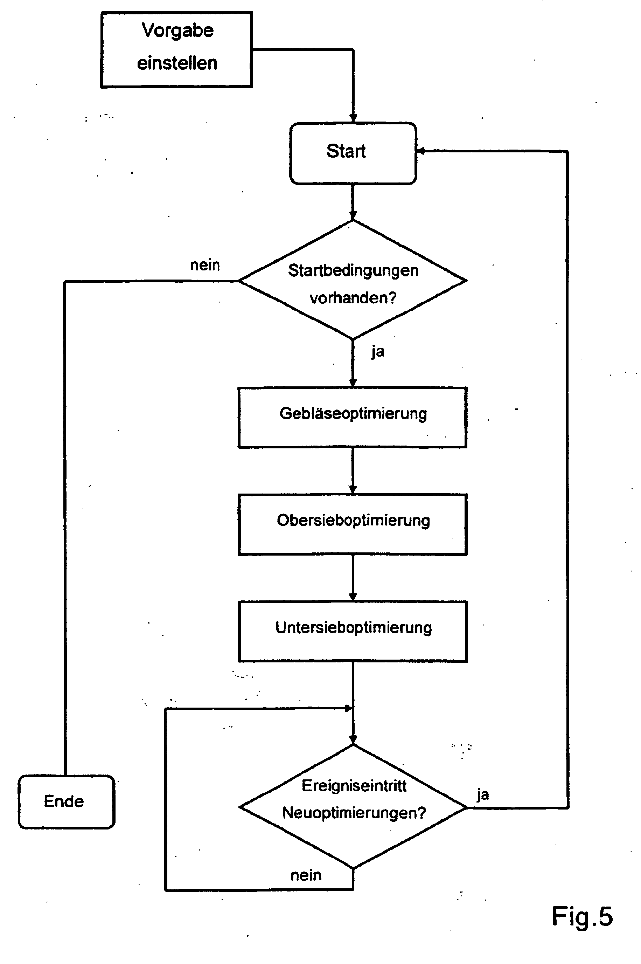

Zur Erläuterung des Ablaufs eines kompletten Optimierungsvorgangs der Reinigungseinrichtung 10 wird auf Figur 5 verwiesen.

Das Verfahren beginnt zunächst damit, dass zunächst der Bediener wie vorbeschrieben einen Vorgabewert VW einstellt. Dann wird vom Bediener die Optimierung gestartet. Dieses Starten erfolgt beispielsweise durch Berühren des Starfifeldes 46 auf dem Bedienerterminal 40 (siehe Figur 2). Als erster Schritt wird dann geprüft, ob die erforderlichen Startbedingungen gegeben sind, d. h. ob die Dreschorgane und die Reinigungseinrichtung 10 eingestellt sind. Ist dies nicht der Fall, so wird das Verfahren sofort beendet.

Andernfalls wird mit der Optimierung der Gebläsedrehzahl begonnen. Als Startwerte werden dabei zunächst für die einzelnen Steuerparameter Einstellwerte gewählt, welche innerhalb des elektronischen Bordsystems für die jeweilige Erntefrucht vorgegeben sind.

Zur Messung der Arbeitsergebnis-Kennlinien KR, KK, KV werden dann die Arbeitsergebnis-Messwerte KR, KK, KV bei verschiedenen Einstellwerten $M_1$, $M_2$, $M_3$, $M_4$, $M_5$ (im Folgenden auch "Messpunkte" genannt) des zu optimierenden Steuerparameters erfasst. Da in dem vorliegenden Fall zunächst das Gebläse optimiert werden soll, werden für verschiedene Messpunkte $M_1$, $M_2$, $M_3$, $M_4$, $M_5$ der Gebläsedrehzahl jeweils Arbeitsergebnis-Messwerte MR, MK, MV gemessen. Für eine solche Messung ist es erforderlich, dass die übrigen Parameter nicht verstellt werden und auch die sonstigen Erntebedingungen möglichst konstant bleiben. Dies betrifft insbesondere den Durchfluss.

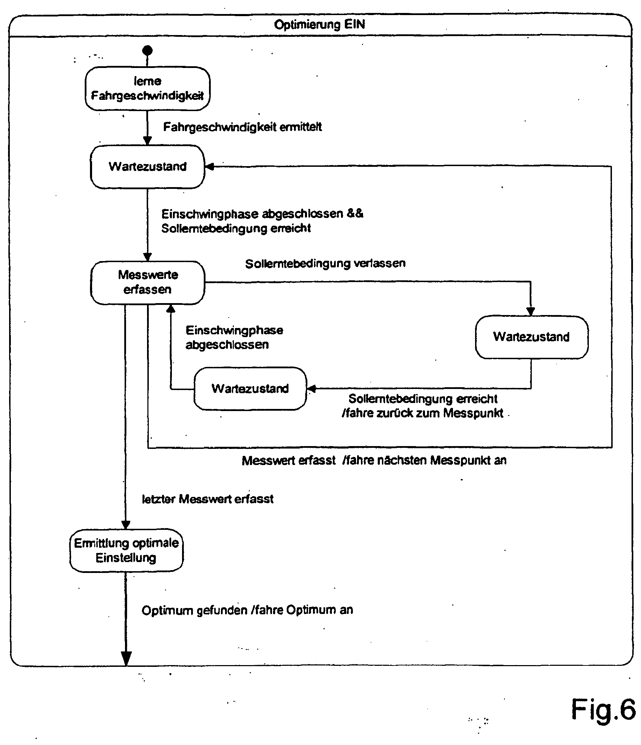

Der Ablauf der kompletten Messung bis zur Ermittlung des optimalen Ziel-Einstellwertes ZG ist in Figur 6 schematisch dargestellt. Diese Figur zeigt ein sog. UML-Zustandsdiagramm, das den Messverlauf für die Gebläsedrehzahl beschreibt (UML = Unified Modelling Language; innerhalb dieses UML-Diagramms haben die Symbole "/" die Bedeutung "Bedingung bzw. Maßnahme" und die Symbole "&&" die Bedeutung "und".)

Zunächst wird eine konstante Fahrgeschwindigkeit vom System "gelernt". Wie oben erwähnt, ist eine wichtige Forderung für die Durchführung einer Optimierung ein gleichmäßiger Gutfluss während der Messung. Die Durchflussmenge hängt aber stark von der Geschwindigkeit ab. Daher muss darauf geachtet werden, dass während der gesamten Optimierung möglichst eine konstante durchschnittliche Geschwindigkeit gehalten wird. Auf dem Display wird dieser Zustand des "Lernens" der aktuellen Fahrgeschwindigkeit dem Bediener, wie in Figur 3 dargestellt, auf der Benutzeroberfläche 41 des Bedienerterminals 40 angezeigt. Dabei werden von den Arbeitsaggregaten als Startwerte die fruchtartabhängigen, voreingestellten Werte des elektronischen Bordsystems angefahren. Diese sind die Grundeinstellungen der Aggregate. In den Einstellwert-Anzeigefeldern 45 wird jeweils der Startwert des betreffenden Steuerparameters angezeigt, hier eine Gebläsedrehzahl von 1.200 Umdrehungen/Min., eine Obersiebeinstellung von 15 mm und eine Untersiebeinstellung von 9 mm, wie man sie beispielsweise als Startwerte bei der Weizenernte verwenden könnte.

Sobald eine mittlere Fahrgeschwindigkeit erreicht wird, wird dies ebenfalls auf der Benutzeroberfläche 41 dargestellt (siehe Figur 4). Dort wird in einem Geschwindigkeitsanzeigefeld auch die aktuelle Geschwindigkeit innerhalb eines Toleranzbereichs dargestellt. Der Fahrer muss dann dafür sorgen, dass die aktuelle Geschwindigkeit innerhalb dieses Toleranzbereichs möglichst in der ebenfalls angezeigten Mitte bleibt.

Über das nun anstelle des Startfelds angezeigte Stoppfeld kann der Bediener jederzeit die Optimierung stoppen, die Maschine kehrt dann zu den Startwerten zurück. Ebenso kann der Bediener durch Anwahl der Symbole neben den Einstellwert-Anzeigefeldern 45 selektiv auswählen, welche der Steuerparameter "Gebläsedrehzahl" SG, "Obersiebweite" SO, "Untersiebweite" SU optimiert werden sollen. Standardmäßig werden, wie in Figur 5 angezeigt, nacheinander zunächst das Gebläse, dann das Obersieb und schließlich das Untersieb optimiert.

Nachdem die gewünschte Fahrgeschwindigkeit erreicht ist, wird für den zu optimierenden Parameter, d. h. hier die Gebläsedrehzahl, der erste Mess-einstellwert angefahren. Das System selbst befindet sich dann zunächst in einem Wartezustand, bis eine Einschwingphase abgeschlossen ist, in der sich die Parameter nach der Einstellung der Fahrgeschwindigkeit und der Startwerte stabilisiert haben. Hierzu kann eine fixe Totzeit, beispielsweise von einigen Sekunden, vorgegeben werden. Ist die Einschwingphase abgeschlossen und die aktuellen Sollerntebedingungen erreicht, so kann mit der Messung des ersten Messwerts begonnen werden.

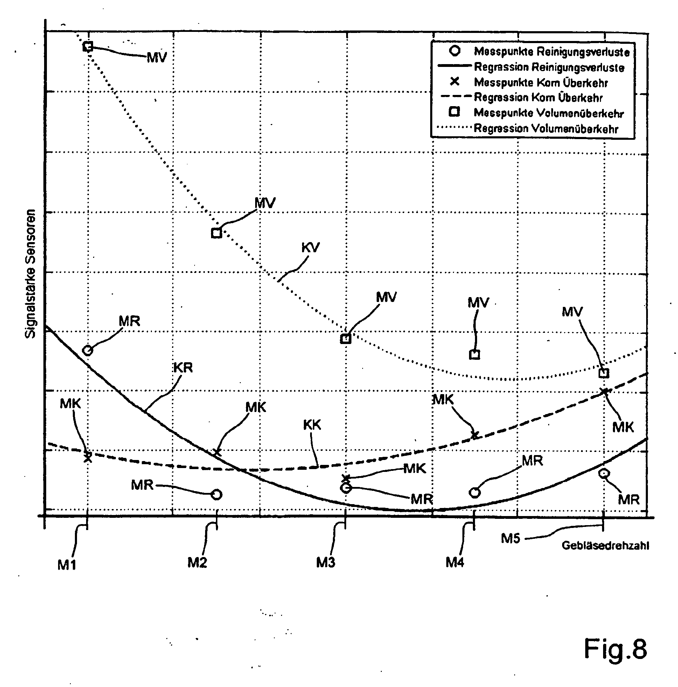

Es werden dann von den verschiedenen Messeinrichtungen 16, 17, 18 bei dem vorgegebenen ersten Messpunkt $M_1$ die verschiedenen Arbeitsergebnis-Messwerte MR, MK, MV erfasst. Das heißt, es werden beispielsweise bei einer eingestellten relativ niedrigen Drehzahl ein Messwert MR für die Reinigungsverluste, ein Messwert MK für die Kornüberkehr und ein Messwert MV für die Volumenüberkehr erfasst. Dies ist in Figur 8 dargestellt. Dort sind die verschiedenen Messwerte MV, MR, MK über der Gebläsedrehzahl für den ersten Messpunkt $M_1$ ganz links dargestellt. Wenn die Messwerterfassung abgeschlossen ist, wird der nächste Messpunkt $M_5$ angefahren und nach Abwarten der Einschwingphase die weiteren Messwerte für die Reinigungsverluste, die Kornüberkehr und die Volumenüberkehr erfasst. Auch diese Messwerte sind in Figur 8 aufgetragen.

Dabei wird hier vorzugsweise nicht der nächst höhere Messpunkt $M_2$, sondern ein Messpunkt $M_5$ angefahren, der am anderen Ende des zu messenden Bereichs liegt. D. h. es wird beispielsweise zunächst bei der niedrigsten und anschließend bei der höchsten zu messenden Gebläsedrehzahl gemessen. Danach wird dann bei der zweitniedrigsten und anschließend bei der zweithöchsten Gebläsedrehzahl gemessen usw. Dieses wechselweise Messen bei hohen und niedrigen Extremwerten hat den Vorteil, dass - da in diesen Bereichen in der Regel ja die Verluste und die Überkehr höher sind - die Aggregate nicht überlastet werden und systematische Messfehler, welche durch kontinuierlich addierende Störungen hervorgerufen werden könnten, vermieden werden.

Sofern während einer Erfassung von Messwerten die Sollerntebedingungen verlassen werden, beispielsweise weil die Maschine aus dem Bestand herausfährt, wird die Messung unterbrochen und es können z. B. die vom Bordinformationssystem vorgegebenen Startwerte angefahren und der bisher schon gemessene Messwert gespeichert werden. Die Maschine bleibt dann so lange in einem Wartezustand, bis die Sollerntebedingungen wieder erreicht sind. Anschließend wird wieder der Mess-Einstellwert $M_1$, $M_2$, $M_3$, $M_4$, $M_5$ eingestellt, bei dem die aktuelle Messung erfolgen soll, und, nachdem die Einschwingphase abgewartet wurde, die Messwerterfassung fortgesetzt.

Diese Unterbrechung der Messung kann beispielsweise mit Hilfe von Sensoren zur Bestandserkennung automatisch erfolgen. Hierfür werden vorzugsweise zwei Sensoren verwendet. Zum einen kann mittels eines ersten Sensors eine Schichthöhe im Einzug ermittelt werden. Fährt die Maschine nämlich aus dem Bestand heraus, nimmt die Strohhöhe im Schrägförderer fast ohne zeitliche Verzögerung ab. Mit Hilfe dieses Sensors kann das Verlassen des Bestands signalisiert und dementsprechend die Messung sofort unterbrochen werden. Für das erneute Starten des Messvorgangs wird vorzugsweise eine davon getrennte Messeinrichtung, beispielsweise eine Korndurchsatz-Messeinrichtung, verwendet. Damit wird geprüft, ob der Korndurchsatz wieder oberhalb einer Mindestschwelle liegt. Da dieser Sensor, der beispielsweise die Fördermenge im oberen Bereich des Kornelevators registriert, im Verhältnis zur Reinigungseinrichtung verzögert reagiert, hat sich auch schon bei einem kleineren Pegel dieses Sensors die Gutschicht auf dem Obersieb der Reinigungseinrichtung vollständig ausgebildet, so dass mit Sicherheit die Sollerntebedingungen wieder erreicht sind.

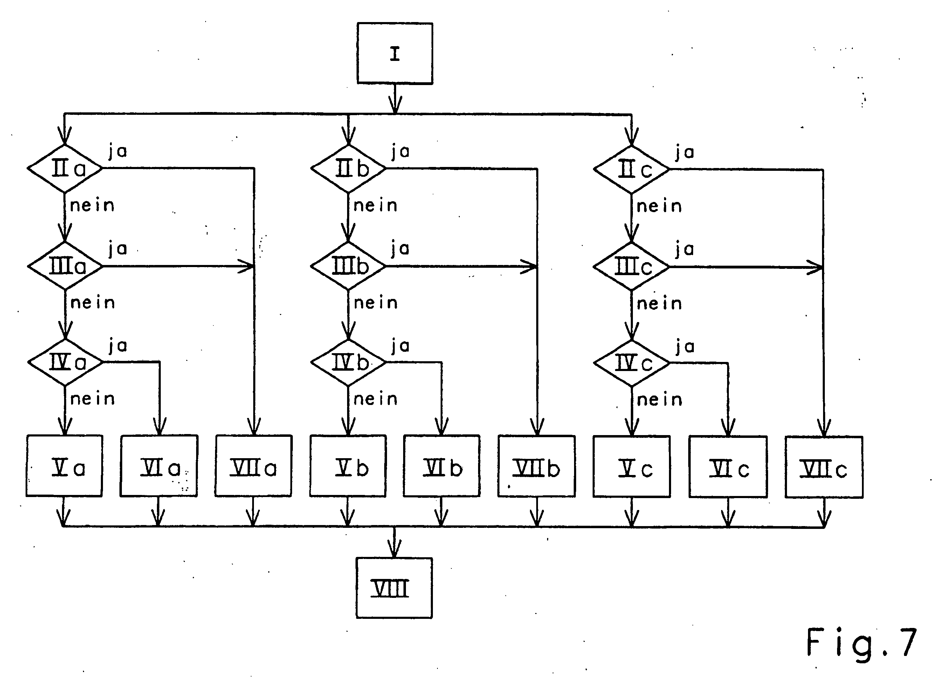

Sind schließlich alle Messungen abgeschlossen, so wird in einem nachfolgenden Schritt in der erfindungsgemäßen Weise der optimale Ziel-Einstellwert ZG ermittelt. Zur Erläuterung dieses Vorgangs wird auf Figur 7 und Figur 8 verwiesen.

Zunächst werden hierzu in einem ersten Schritt 1 mathematische Funktionen an die Ergebnis-Messwerte MR, MK, MV angepasst, um so die Ergebnis-Kennlinien KR, KK, KV zu erhalten. Da aufgrund der physikalischen Bedingungen zu erwarten ist, dass die Kennlinien KR, KK, KV parabelförmig sind, werden die optimal angepassten mathematischen Funktionen mit Hilfe eines quadratischen Regressionsverfahrens nach dem Ansatz der kleinsten Fehlerquadrate ermittelt. Die Ausgangsform einer solchen quadratischen Funktion sieht wie folgt aus:

$$y = a_2 x^2 + a_1 x + b \tag{1}$$

Innerhalb einer Regressionsanalyse werden jeweils aus den vorliegenden Messwerten MR, MK, MV die drei Koeffizienten $a_1$, $a_2$, b für diese Gleichung bestimmt. Hierzu werden folgende Gleichungen genutzt, um einen Faktor k und Hilfsgrößen A bis F zu berechnen:

$$k = n\left(\sum x_i^2\right)\left(\sum x_i^4\right) + 2\left(\sum x_i\right)\left(\sum x_i^2\right)\left(\sum x_i^3\right)$$
$$- \left(\sum x_i^2\right)^3 - n\left(\sum x_i^3\right)^2 - \left(\sum x_i\right)^2\left(\sum x_i^4\right) \tag{2}$$

$$A = \left[\left(\sum x_i^2\right)\left(\sum x_i^4\right) - \left(\sum x_i^3\right)^2\right]\frac{1}{k} \tag{3}$$

$$B = \left[n\left(\sum x_i^4\right) - \left(\sum x_i^2\right)^2\right]\frac{1}{k} \tag{4}$$

$$C = \left[ n\left(\sum x_i^2\right) - \left(\sum x_i\right)^2 \right]\frac{1}{k} \qquad (5)$$

$$D = \left[ \left(\sum x_i^3\right)\left(\sum x_i^2\right) - \left(\sum x_i\right)\left(\sum x_i^4\right) \right]\frac{1}{k} \qquad (6)$$

$$E = \left[ \left(\sum x_i\right)\left(\sum x_i^3\right) - \left(\sum x_i^2\right)^2 \right]\frac{1}{k} \qquad (7)$$

$$F = \left[ \left(\sum x_i\right)\left(\sum x_i^2\right) - n\left(\sum x_i^3\right) \right]\frac{1}{k} \qquad (8)$$

Mit dem Faktor k und den Hilfsgrößen A bis F lassen sich die einzelnen Koeffizienten des Regressionspolynoms wie folgt ermitteln:

$$b = A\sum y_i + D\sum x_i y_i + E\sum x_i^2 y_i \qquad (9)$$

$$a_1 = D\sum y_i + B\sum x_i y_i + F\sum x_i^2 y_i \qquad (10)$$

$$a_2 = E\sum y_i + F\sum x_i y_i + C\sum x_i^2 y_i \qquad (11)$$

In den obigen Gleichungen ist n jeweils die Anzahl der Messpunkte, $x_i$ sind jeweils die Werte der einzelnen Messpunkte und $y_i$ die an den Messpunkten $x_i$ gemessenen Ergebnis-Messwerte für den betreffenden Ergebnisparameter. i ist eine Laufvariable, die von 1 bis n läuft. Die Aufsummierung erfolgt jeweils über i = 1 bis n.

In Figur 8 sind die Kennlinie KR für die Reinigungsverluste, die Kennlinie KK für die Kornüberkehr und die Kennlinie KV für die Volumenüberkehr dargestellt. Alle Kurven nehmen mit zunehmender Gebläsedrehzahl jeweils zunächst ab und steigen dann mit weiter zunehmender Gebläsedrehzahl wieder an. Dies liegt daran, dass sich mit zu geringen Gebläsedrehzahlen auf den Sieben 12, 13 eine zu dichte Matte ausbildet und die Reinigungseinrichtung 10 nicht mehr effektiv arbeiten kann. Wird die Gebläsedrehzahl zu stark erhöht, so werden durch den Wind zu viele Teilchen aus der Maschine getragen, so dass die Verluste stark ansteigen. Ebenso werden auch Körner, die an sich durch das Untersieb 13 fallen sollten, vermehrt in die Überkehr hineingetragen, so dass sowohl die Kornüberkehr-Kennlinie KK als auch die Volumenüberkehr-Kennlinie KV ansteigen.

Die Minima RM, KM, VM dieser Kurven KR, KK, KV sind an sich jeweils der ideale Einstellwert des Gebläses bezüglich der betreffenden Kennlinie KR, KK, KV. Ungünstigerweise liegen jedoch die Minima RM, KM, VM nicht übereinander, so dass ein optimaler Ziel-Einstellwert ZG ermittelt werden muss, der alle Ergebnisparameter in geeigneter Weise berücksichtigt. Hierzu werden die Minima RM, KM, VM der einzelnen Kennlinien KR, KK, KV in geeigneter Weise verknüpft, wobei jedoch zunächst noch einige Abfragen erfolgen, inwieweit die einzelnen ermittelten Kennlinien KR, KK, KV aussagekräftig genug sind.

Dieser Prozess ist in Figur 7 abgebildet. Im Schritt I ist die zunächst die quadratische Regression dargestellt, welche für alle drei Ergebnisparameter, d. h. für die Reinigungsverluste, die Kornüberkehr und die Volumenüberkehr, durchgeführt wird, um die drei Kennlinien KR, KK, KV zu ermitteln.

Parallel werden dann für alle drei Arbeitsergebnis-Kennlinien KR, KK, KV jeweils zunächst kennlinienspezifische Ziel-Einstellwerte ZR, ZK, ZV ermittelt. Hierzu werden folgende Abfragen durchgeführt (wobei sich die folgenden Erläuterungen als Beispiel zunächst auf die Behandlung der Reinigungsverlust-Kennlinie KR beziehen):

Für die Kennlinie KR wird zunächst im Schritt IIa geprüft, ob der Formfaktor, welcher ein Maß für die Krümmung der Parabel ist, ausreichend groß ist.

Das heißt, es wird der Formfaktor der gemessenen Kennlinie KR mit einem Schwellenwert verglichen und nur, wenn dies der Fall ist, wird das Minimum RM der ermittelten Kennlinie KR als kennlinienspezifischer Ziel-Einstellwert ZR für die Gebläsedrehzahl hinsichtlich der Reinigungsverluste akzeptiert (Schritt VIIa). Ist der Formfaktor zu gering, so ist das Minimum RM nicht eindeutig ausgebildet, so dass der Aussagewert der Kennlinie KR sehr gering ist.

Daher wird in einem weiteren Abfrageschritt IIIa zunächst gefragt, ob die Signaländerung ausreichend groß ist. Hierzu wird geprüft, ob die Differenz zwischen dem Arbeitsergebnis-Wert im Minimum RM der Kennlinie KR und einem Arbeitsergebnis-Messwert bei einem maximalen Messpunkt des betreffenden Steuerparameters - hier bei einem Gebläsedrehzahl-Messpunkt - einen bestimmten Wert überschreitet. Ist dies der Fall, so kann davon ausgegangen werden, dass die Kurve dennoch eindeutig genug ist, so dass dann doch im Schritt VIIa das Minimum der Kennlinie KR als optimaler kennlinienspezifischer Ziel-Einstellwert ZR für das Gebläse hinsichtlich der Reinigungsverluste akzeptiert wird.

Andernfalls wird im Schritt IVa geprüft, ob überhaupt eine erkennbare Signaländerung feststellbar ist. Hierzu wird der o. g. Differenzwert zwischen dem Minimum RM der Arbeitsergebnis-Kennlinie KR und einem Arbeitsergebnis-Messwert bei einem höheren Messpunkt des betreffenden Steuerparameters noch einmal herangezogen und mit einem weiteren, geringeren Schwellenwert verglichen. Liegt die Differenz nicht unterhalb dieses Schwellenwerts, so wird davon ausgegangen, dass die Kurve nicht aussagekräftig ist und es wird der fruchtabhängige, vom elektronischen Bordsystem vorgegebene Startwert als kennlinienspezifischer Ziel-Einstellwert ZR des Steuerparameters hinsichtlich der Reinigungsverluste herangezogen (Schritt Va). Liegt der Differenzwert dagegen unterhalb des Schwellenwerts, d. h. wird keine Signaländerung feststellbar, wird dieser Startwert plus einem Zuschlag verwendet, d. h. die Gebläsedrehzahl wird um einen bestimmten Wert erhöht und dieser Wert als kennlinienspezifischer Ziel-Einstellwert ZR angenommen. Da die Verluste bei einer Erhöhung der Gebläsedrehzahl in diesem Fall nicht wesentlich ansteigen, ist diese Wahl als kennlinienspezifischer Ziel-Einstellwert ZR hinsichtlich der Verluste sinnvoll, da dadurch die Reinigungsleistung: verbessert wird, ohne dass erhöhte Verluste in Kauf genommen werden müssen.

In den Schritten IIb bis VIIb wird parallel das gleiche Verfahren für die Kornüberkehr und in den Schritten IIc bis VIIc für die Volumenüberkehr durchgeführt. Der einzige Unterschied besteht darin, dass im Schritt VIIb und VIIc die ermittelten Minima KM, VM der betreffenden Kurven KK, KV noch mit einem Offset-Wert OK, OV beaufschlagt werden, um die jeweiligen kennlinienspezifischen Ziel-Einstellwerte ZK, ZV zu ermitteln. Diese Offset-Werte OK, OV dienen dazu, die Hauptpriorität bei der Bestimmung des optimalen Ziel-Einstellwertes ZG auf die Reinigungsverluste zu legen, d. h. um die Reinigungsverlust-Kennlinie KR stärker zu gewichten, da Kornüberkehr und Volumenüberkehr im Verhältnis zu den Reinigungsverlusten im täglichen Betrieb eine etwas untergeordnetere Rolle spielen sollten.

Der Offset OK, OV wird dabei so gelegt, dass bezüglich des Minimums KM der Kornüberkehr-Kennlinie KM die Gebläsedrehzahl erhöht wird und hinsichtlich des Minimums KV der Volumenüberkehr-Kennlinie KV die Gebläsedrehzahl verringert wird. Im System wird dabei ein fixer Offset-Wert bezüglich des Arbeitsergebnisparameters vorgegeben. Eine solche Verschiebung entlang der gemessenen Kennlinie um einen fixen Arbeitsergebniswert, d. h. in y-Richtung der jeweiligen Kennlinie KK, KV, ermöglicht eine dynamische Anpassung der Offsets OK, OV bezüglich des Steuerparameters, d. h. in x-Richtung. Das heißt, der eigentliche Offset-Wert ist von der Steilheit der Kennlinie KK, KV innerhalb des Minimumbereichs abhängig. Ist die Kennlinie KK, KV stark gekrümmt, ergibt sich nur eine geringe Verschiebung. Bei flachen Kennlinienverläufen und somit geringen Differenzen in der Überkehr fällt die Änderung dagegen größer aus.

Eine solche Verschiebung des optimalen Ziel-Einstellwerts hinsichtlich eines bestimmten Steuerparameters berechnet sich nach der Lösung der quadratischen Gleichung (1) wie folgt:

$$x_{Gbl\_Neu} = -\frac{a_1}{a_2 2} \pm \sqrt{\left(\frac{a_1}{a_2 2}\right)^2 - \left(\frac{b - (y_{Min} + \text{Offset})}{a_2}\right)} \qquad (12)$$

Hierbei ist $y_{Min}$ der Arbeitsergebniswert im Minimum KM, VM der jeweiligen Arbeitsergebnis-Kennlinie KK, KV und $X_{Neu}$ der kennlinienspezifische Ziel-Einstellwert ZK, ZV für den Steuerparameter bezüglich dieser Kennlinie KK, KV, welche anstelle des ermittelten Minimums KM, VM der Kennlinie KK, KV verwendet wird. Je nach Vorzeichen der Quadratwurzeln in Gleichung (12) ergibt sich eine Verschiebung nach links (für die Volumenüberkehr) oder rechts (für die Kornüberkehr).

In die Offsets kann jeweils auch der Vorgabewert VW zum Erreichen einer "erhöhten Reinigungsleistung" oder einer "erhöhten Sauberkeit" eingehen, welchen der Bediener zu Beginn der Optimierung eingestellt hat. Dementsprechend werden die Offsets der Kornüberkehr-Kennlinie KK und der Volumenüberkehr-Kennlinie KV nach links oder rechts verschoben. Alternativ kann selbstverständlich auch auf den insgesamt ermittelten Ziel-Einstellwert ZG in Abhängigkeit von dem Vorgabewert ein Offset in der einen oder anderen Richtung aufgeschlagen werden.

Die jeweils in den Schritten Va bis VIIa, Vb bis VIIb und Vc bis VIIc ermittelten kennlinienspezifischen Ziel-Einstellwerte ZR, ZK, ZM werden dann im Schritt VIII zu einem Mittelwert zusammengefasst. Dieser Mittelwert ist schließlich der optimierte Ziel-Einstellwert ZG für den betreffenden Steuerparameter, hier für die Gebläsedrehzahl ZG.

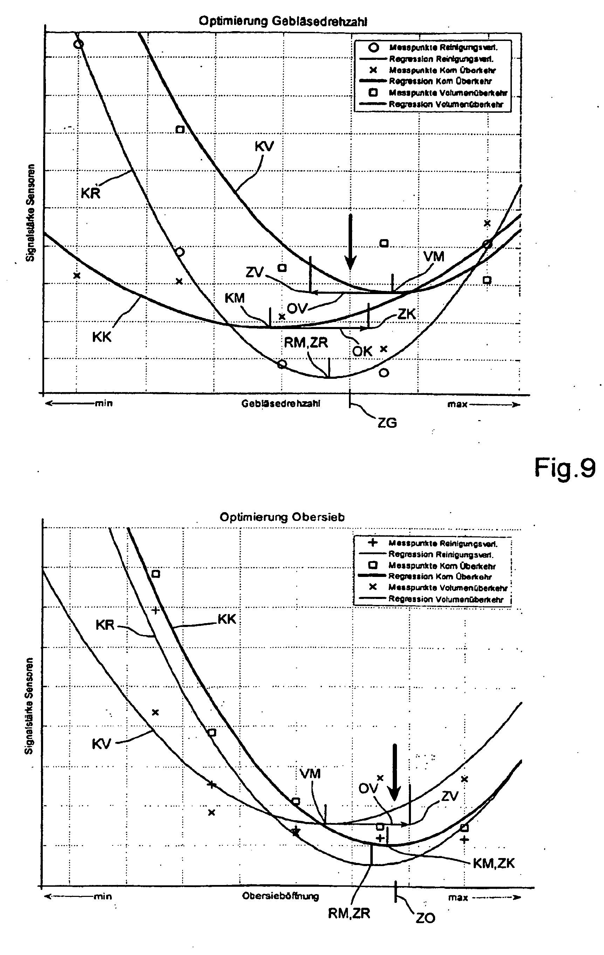

Dieses Vorgehen ist in Figur 9 noch einmal graphisch dargestellt. Gezeigt sind hier die Arbeitsergebnis-Kennlinien KR, KK, KV für die Reinigungsverluste, die Volumenüberkehr und die Kornüberkehr. Für alle drei Kennlinien KR, KK, KV sind jeweils die Minima RM, KM, VM eingezeichnet. Ebenso sind für die Kornüberkehr-Kennlinie KK und die Volumenüberkehr-Kennlinie KV die Offsets OK, OV und der sich daraus ergebende kennlinienspezifische Ziel-Einstellwert ZK, ZV eingezeichnet. Außerdem ist der optimale Ziel-Einstellwert ZG eingezeichnet, welcher sich aus dem Mittelwert der kennlinienspezifischen Ziel-Einstellwerte ZR, ZK, ZV ergibt, welcher bei der Reinigungsverlust-Kennlinie KK dem Minimum entspricht. Dieser ist in der Figur zusätzlich durch den Pfeil markiert.

Nachdem dieser optimierte Ziel-Einstellwert ZG für die Gebläsedrehzahl SG ermittelt wurde, kann das Gebläse mit dem Ziel-Einstellwert ZG eingestellt werden (siehe Figur 6)..

Anschließend erfolgt, wie in Figur 5 dargestellt, die Obersieboptimierung, wobei bereits der optimierte Ziel-Einstellwert ZG des Gebläses 11 verwendet wird. Startwerte sind also hier für die Gebläsedrehzahl SG der zuvor ermittelte optimale Ziel-Einstellwert ZG sowie für alle weiteren Parameter die fruchtartabhängigen Startwerte, wie sie aus dem elektronischen Bordinformationssystem übernommen werden.

Es werden dann - wie bei der Gebläseoptimierung - für verschiedene Einstellungen der Obersiebweite SO Messwerte für die Reinigungsverluste, die Volumenüberkehr und die Kornüberkehr ermittelt. Das Verfahren läuft dabei genau wie bei der Ermittlung des Ziel-Einstellwertes ZG für die Gebläsedrehzahl SG ab, wie dies anhand der Figuren 6 und 7 erläutert wurde, d. h. es werden die gleichen Verfahrensschritte nun hinsichtlich der Obersiebweiteneinstellung durchlaufen. Ebenso werden für alle drei Arbeitsergebnisparameter jeweils Kennlinien KR, KK, KV mit Hilfe der quadratischen Regression (vgl. Schritt I von Figur 7) ermittelt und anschließend die Minima in geeigneter Weise verknüpft.

Der einzige Unterschied zur Ermittlung des Ziel-Einstellwerts ZG für die Gebläsedrehzahl SG besteht hier darin, dass nur bei der Volumenüberkehr ein Offset OV eingestellt wird. Für die Kornüberkehr und die Reinigungsverluste wird als kennlinienspezifischer Ziel-Einstellwert ZR, ZK jeweils das Minimum RM, KM der Kennlinien KR, KK verwendet. Dies ist in Figur 10 graphisch dargestellt. Auch hier sind wieder die Minima RM, KM, VM aller drei Kennlinien KR, KK, KV angegeben sowie für die Volumenüberkehr-Kennlinie KV auch der Offset OV und der kennlinienspezifische Ziel-Einstellwert ZV. Außerdem ist der sich aus den einzelnen Werten ergebende Ziel-Einstellwert ZO für die Obersieböffnung dargestellt.

Wie aus Figur 5 zu ersehen ist, wird nach der Obersieboptimierung anschließend die Untersieboptimierung durchgeführt. Die Messung der einzelnen Arbeitsergebnis-Messwerte in Abhängigkeit von der Untersiebweiteneinstellung erfolgt auch hier analog dem in Figur 6 dargestellten Verfahren.

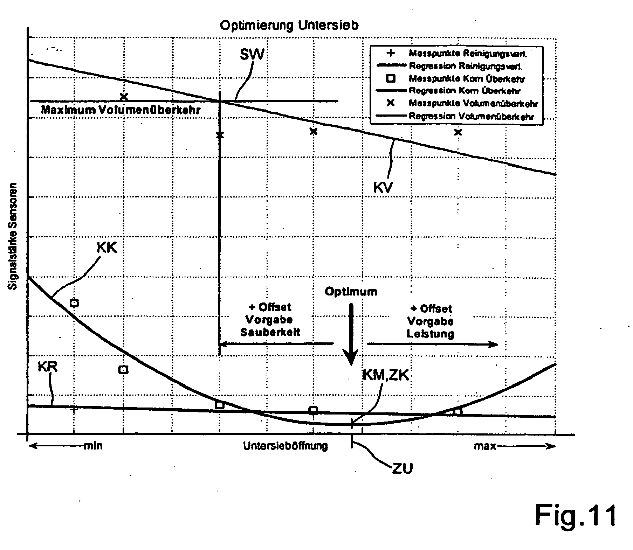

Allerdings wird der optimale Ziel-Einstellwert ZU für die Untersieböffnung SU (siehe Fig.11) nur noch in Abhängigkeit von der Kornüberkehr-Kennlinie KK und der Volumenüberkehr-Kennlinie KV ermittelt, da das Untersieb keinen Einfluss auf die Reinigungsverluste hat. Außerdem wird für die Volumenüberkehr keine quadratische Kurve an die Messwerte angepasst, sondern mittels linearer Regression eine Gerade als Kennlinie KV ermittelt, da mit weiterer Öffnung des Untersiebs 13 die Volumenüberkehr absinkt, aber nicht wieder ansteigen kann.

Der Ziel-Einstellwert ZU wird daher in erster Linie auf Basis des Minimums KM der Kornüberkehr-Kennlinie KK ermittelt, wobei dem dort ermittelten kennlinienspezifischen. Ziel-Einstellwert ZK (welcher hier dem Minimum KM entspricht) noch je nach Vorgabewert VW ein Offset in der einen oder anderen Richtung aufgeschlagen wird, um so eine erhöhte Sauberkeit oder eine höhere Reinigungsleistung zu erreichen. Soll die Reinigungsleistung erhöht werden, wird das Untersieb 13 etwas weiter geöffnet, soll die Sauberkeit erhöht werden, wird die Untersieböffnungsweite reduziert.

Die Verknüpfung der beiden Arbeitsergebnis-Kennlinien KK, KV erfolgt hier also (in nicht erfindungsgemässer Weise)nicht über eine Verknüpfung von Extremwerten beider Kurven KK, KV, sondern in der Form, dass anhand einer Kennlinie KV, nämlich hier der Volumenüberkehr-Kennlinie KV, ein Schwellenwert SW gewählt wird, welcher bei einer Ermittlung eines optimalen Ziel-Einstellwerts ZU nach der anderen Kennlinie, hier der Kornüberkehr-Kennlinie KK, nicht unterschritten werden darf. Auf diese Weise wird sichergestellt, dass zwar ein bezüglich der Kornüberkehr idealer Wert für die Untersieböffnungsweite SU gefunden wird, andererseits aber die Volumenüberkehr nicht so groß ist, dass das Dreschwerk 4 überlastet und somit die Gesamtleistung der Maschine 1 verringert wird.

Nachdem auch die Untersieboptimierung durchgeführt wurde, wird dann gewartet, ob ein Ereignis eintritt, welches zu einer Neuoptimierung führt (siehe Figur 5). Ein automatischer Neustart des Optimierungsprozesses kann beispielsweise zeitabhängig erfolgen, wenn damit zu rechnen ist, dass sich die Erntebedingungen geändert haben, durchsatzabhängig, wenn z. B. die Erntegeschwindigkeit erheblich geändert wird, einstellungsabhängig, wenn am Mähdrescher andere Einstellungen geändert werden, bei denen zu erwarten ist, dass sich die Reinigungsbelastung entsprechend ändert, oder auch erntegutabhängig, wenn z. B. eine Änderung einer Ernteguteigenschaft wie eine geänderte Kornfeuchte gemessen wird. Im Falle einer solchen wiederholten Optimierung werden für die Voreinstellung, anders als bei der ersten Optimierung, für den Start nicht die fruchtabhängigen Einstellwerte aus dem elektronischen Bordinformationssystem übernommen, sondern die Ziel-Einstellwerte ZG, ZO, ZU, die im ersten Optimierungsdurchgang ermittelt wurden. Diese Ziel-Einstellwerte ZG, ZO, ZU können grundsätzlich auch ins elektronische Bordinformationssystem übernommen werden, wobei vorzugsweise die Erntebedingungen - soweit dies möglich ist - mitprotokolliert werden, so dass bei einem späteren Ernteprozess auch die in einem Optimierungsprozess ermittelten Ziel-Einstellwerte ZG, ZO, ZU als Startwerte herangezogen werden, bei denen die Erntebedingungen relativ ähnlich waren.

Aus Sicherheitsgründen ist das System so ausgelegt, dass der Fahrer während eines Ernteeinsatzes jederzeit in der Lage ist, einzelne oder alle eingestellten Maschinenparameter manuell zu übersteuern. Es wird abschließend noch einmal darauf hingewiesen, dass es sich bei dem in den Figuren dargestellten Mähdrescher und der Steuerung sowie dem im Zusammenhang damit erläuterten konkreten Verfahren lediglich um Ausführungsbeispiele handelt, welche vom Fachmann in vielfacher Hinsicht variiert werden können, ohne den Rahmen der Erfindung, die durch die nachfolgenden Patentansprüche definiert ist, zu verlassen.

**Bezugszeichenliste**

1    Mähdrescher

2    Mäheinrichtung

3    Einzugskanal

4    Drescheinrichtung

5    Vorbeschleunigertrommel

6    Dreschtrommel

7    Wendetrommel

8    Dreschkorb

9    Hordenschüttler

10    Reinigungseinrichtung

11    Gebläse

12    Obersieb

13    Untersieb

14    Überkehrelevator

15    Elevator

16    Messeinrichtung

17    Messeinrichtung

18    Messeinrichtung

19    Korntank

20    Fahrerkabine

| 30 | Steuereinrichtung |
| 31 | Messwert-Eingang |
| 32 | Messwert-Eingang |
| 33 | Messwert-Eingang |
| 34 | Terminalschnittstelle |
| 35 | Steuerparameter-Ausgang |
| 36 | Steuerparameter-Ausgang |
| 37 | Steuerparameter-Ausgang |
| 38 | Kennlinien-Berechnungseinrichtung |
| 39 | Ziel-Einstellwerte-Ermittlungseinrichtung |
| 40 | Bedienerterminal |
| 41 | Benutzeroberfläche |
| 42 | Vorgabewert-Anzeige |
| 43 | Vorgabefeld |
| 44 | Vorgabefeld |
| 45 | Einstellwert-Anzeigefeld |
| 46 | Startfeld |
| $M_1$ | Mess-Einstellwert / Messpunkt |
| $M_2$ | Mess-Einstellwert / Messpunkt |
| $M_3$ | Mess-Einstellwert / Messpunkt |
| $M_4$ | Mess-Einstellwert / Messpunkt |
| $M_5$ | Mess-Einstellwert / Messpunkt |
| MK | Kornüberkehr-Messwert |
| MR | Reinigungsverlust-Messwert |
| MV | Volumenüberkehr-Messwert |
| KK | Kornüberkehr-Kennlinie |
| KR | Reinigungsverlust-Kennlinie |
| KV | Volumenüberkehr-Kennlinie |
| ZG | Ziel-Einstellwert |

ZU      Ziel-Einstellwert

ZO      Ziel-Einstellwert

OK      Kornüberkehr-Offset

OV      Volumenüberkehr-Offset

KM      Kornüberkehr-Minimum

RM      Reinigungsverlust-Minimum

VM      Volumenüberkehr-Minimum

SG      Steuerparameter / Gebläsedrehzahl

SO      Steuerparameter / Obersieböffnungsweite

SU      Steuerparameter / Untersiebweite

ZR      kennlinienspezifischer Einstellwert

ZK      kennlinienspezifischer Einstellwert

ZV      kennlinienspezifischer Einstellwert


**Patentansprüche**

1.  Verfahren zur Ermittlung eines an einen Ernteprozess angepassten Ziel-Einstellwertes (ZG, ZO, ZU) für einen Steuerparameter (SG, SO, SU) eines Arbeitsaggregats (10) einer Erntemaschine (1),
    bei dem für mehrere verschiedene Arbeitsergebnisparameter jeweils Arbeitsergebnis-Kennlinien (KR, KK, KV) in Abhängigkeit von dem betreffenden Steuerparameter (SG, SO, SU) ermittelt werden
    und basierend auf einer Kombination der ermittelten Arbeitsergebnis-Kennlinien (KR, KK, KV) der Ziel-Einstellwert (ZG, ZO, ZU) des Steuerparameters (SG, SO, SU) bestimmt wird,
    wobei zur Bestimmung des Ziel-Einstellwerts (ZG, ZO, ZU) des Steuerparameters Extrema (RM, KM, VM) und/oder Wendepunkte der Arbeitsergebnis-Kennlinien (KR, KK, KV) ermittelt und gemäß einer vorgegebenen Regel verknüpft werden, und bei einer Verknüpfung das Extremum (RM, KM, VM) und/oder der Wendepunkt zumindest einer der Arbeitsergebnis-Kennlinien (KR, KK, KV) mit einem Offset-Wert (OK, OV) beaufschlagt wird, wobei durch den Offset-Wert (OK, OV) eine Gewichtung verschiedener Arbeitsergebnis-Kennlinien (KR, KK, KV) zueinander erfolgt.

2.  Verfahren nach Anspruch 1, **dadurch gekennzeichnet, dass**
    zur Ermittlung einer Arbeitsergebnis-Kennlinie (KR, KK, KV) bei einer Anzahl von verschiedenen Einstellwerten des Steuerparameters (SG, SO, SU) Arbeitsergebnis-Messwerte (MR, MK, MV) erfasst werden,
    und an die Arbeitsergebnis-Messwerte (MR, MK, MV) eine mathematische Funktion angepasst wird.

3.  Verfahren nach Anspruch 2, **dadurch gekennzeichnet, dass** die Arbeitsergebnis-Messwerte (MR, MK, MV) zur Ermittlung einer angepassten mathematischen Funktion einer Regressionsanalyse unterworfen werden.

4.  Verfahren nach einem der Ansprüche 1 bis 3, **dadurch gekennzeichnet, dass** bei der Ermittlung eines Ziel-Einstellwertes ein Vorgabewert (VW) berücksichtigt wird.

5.  Verfahren nach einem der Ansprüche 1 bis 4, **dadurch gekennzeichnet, dass** zur Bestimmung des Ziel-Einstellwerts (ZG, ZO, ZU) des Steuerparameters jeweils zunächst kennlinienspezifische Ziel-Einstellwerte (ZR, ZK, ZV) und/oder kennlinienspezifische Ziel-Einstellbereiche für die einzelnen Arbeitsergebnis-Kennlinien (KR, KK, KV) ermittelt und gemäß einer vorgegebenen Regel verknüpft werden.

6.  Verfahren nach Anspruch 1, **dadurch gekennzeichnet, dass** zur Bestimmung des Ziel-Einstellwerts (ZG, ZO, ZU) des Steuerparameters aus den kennlinienspezifische Ziel-Einstellwerte (ZR, ZK, ZV) bzw. den Extrema (RM, KM, VM) und/oder Wendepunkten der Arbeitsergebnis-Kennlinien (KR, KK, KV) ein Mittelwert gebildet wird.

7. Verfahren nach Anspruch 6, **dadurch gekennzeichnet, dass** der Offset-Wert (OK, OV) in Abhängigkeit von einer Steilheit der Arbeitsergebnis-Kennlinie (KR, KK, KV) in diesem Bereich gewählt wird.

8. Verfahren nach Anspruch 5 und nach Anspruch 7, **dadurch gekennzeichnet, dass** der Offset-Wert in Abhängigkeit von dem Vorgabewert (VW) gewählt wird.

9. Verfahren nach einem der Ansprüche 1 bis 8, **dadurch gekennzeichnet, dass** das Arbeitsaggregat (10) eine Reinigungseinrichtung (10) umfasst und die Arbeitsergebnis-Kennlinien (KR, KK, KV) Abscheidekennlinien für die Reinigungsverluste und/oder die Kornüberkehr und/oder die Volumenüberkehr umfassen.

10. Verfahren nach Anspruch 9, **dadurch gekennzeichnet, dass** eine Gebläsedrehzahl (SG) und/oder eine Obersieböffnungsweite (SO) der Reinigungseinrichtung (10) auf Basis von Abscheidekennlinien (KR, KK, KV) für die Reinigungsverluste, die Kornüberkehr und die Volumenüberkehr eingestellt werden.

11. Verfahren nach Anspruch 9 oder 10, **dadurch gekennzeichnet, dass** eine Untersieböffnungsweite (SU) der Reinigungseinrichtung (10) auf Basis von Abscheidekennlinien (KK, KV) für die Kornüberkehr und die Volumenüberkehr eingestellt wird.

12. Verfahren nach einem der Ansprüche 2 bis 11, **dadurch gekennzeichnet, dass** zur Erfassung eines Arbeitsergebnis-Messwertes (MR, MK, MV) die Erntebedingungen über einem vorgegebenen Mess-Zeitraum innerhalb eines bestimmten Toleranzbereichs konstant gehalten werden,

13. Verfahren nach einem der Ansprüche 2 bis 12, **dadurch gekennzeichnet, dass** eine Messung eines Arbeitsergebnis-Messwertes (MR, MK, MV) automatisch unterbrochen wird, wenn die Erntemaschine (1) aus einem Erntebestand herausfährt, und nach einem Hereinfahren in den Erntebestand automatisch wieder gestartet wird.

14. Verfahren zur Steuerung eines Arbeitsaggregats einer Erntemaschine, **dadurch gekennzeichnet, dass** zunächst ein Ziel-Einstellwert (ZG, ZO, ZU) für einen Steuerparameter (SG) des Arbeitsaggregats (10) nach einem der Ansprüche 1 bis 13 ermittelt wird und dann das Arbeitsaggregat (10) auf Basis des ermittelten Ziel-Einstellwerts (ZE) angesteuert wird.

15. Verfahren nach Anspruch 14, **dadurch gekennzeichnet, dass** nacheinander Ziel-Einstellwerte (ZG, ZO, ZU) für verschiedene Steuerparameter (SG, SO, SU) des Arbeitsaggregats (10) ermittelt werden, wobei nach einer Ermittlung eines Ziel-Einstellwerts (ZG) für einen ersten Steuerparameter (SG) das Arbeitsaggregat (10) auf Basis des ermittelten Ziel-Einstellwerts (ZG) angesteuert wird und dann ein Ziel-Einstellwert (ZO) für einen weiteren Steuerparameter (SO) des Arbeitsaggregats (10) ermittelt wird.

16. Verfahren nach Anspruch 15, **dadurch gekennzeichnet,**
**dass** das Arbeitsaggregat (10) eine Reinigungseinrichtung (10) umfasst, und dass in einem ersten Schritt ein Ziel-Einstellwert (ZG) für eine Gebläsedrehzahl (SG), in einem zweiten Schritt ein Ziel-Einstellwert (ZO) für eine Obersieböffnungsweite (SO) und in einem dritten Schritt ein Ziel-Einstellwert (ZU) für eine Untersieböffnungsweite (SU) der Reinigungseinrichtung (10) ermittelt werden.

17. Verfahren nach einem der Ansprüche 14 bis 16, **dadurch gekennzeichnet, dass** nach einer bestimmten Zeitspanne und/oder bei Eintritt eines vorgegeben Ereignisses ein neuer Ziel-Einstellwert (ZG, ZO, ZU) für einen Steuerparameter (SG, SO, SU) eines Arbeitsaggregats (10) ermittelt und das Arbeitsaggregat (10) auf Basis des neuen Einstellwerts angesteuert wird.

18. Verfahren nach Anspruch 17, **dadurch gekennzeichnet, dass** das Ereignis eine Änderung eines Erntegut-Durchsatzes und/oder eine Veränderung von Einstellungen anderer Steuerparameter und/oder einen Änderung eines Erntegutparameters beinhaltet.

19. Steuereinrichtung (30) zur Ansteuerung eines Arbeitsaggregats (10) einer Erntemaschine (1) mit

  - einer Anzahl von Messwerteingängen (31, 32, 33) zur Erfassung von Arbeitsergebnis-Messwerten (MR, MK, MV) verschiedener Arbeitsergebnisparameter des Arbeitsaggregats (10),

- einer Kennlinien-Berechnungseinrichtung (38) zur Ermittlung von Arbeitsergebnis-Kennlinien (KR, KK, KV) für die verschiedenen Arbeitsergebnisparameter, welche jeweils auf einer Anzahl von bei verschiedenen Einstellwerten eines bestimmten Steuerparameters (SG, SO, SU) des Arbeitsaggregats (10) erfassten Arbeitsergebnis-Messwerten (MR, MK, MV) des betreffenden Arbeitsergebnisparameters basieren,

- einer Ziel-Einstellwerte-Ermittlungseinrichtung (39) zur Ermittlung eines an einen Ernteprozess angepassten Ziel-Einstellwertes (ZG, ZO, ZU) für den Steuerparameter (SG, SO, SU) basierend auf einer Kombination der ermittelten Arbeitsergebnis-Kennlinien (KR, KK, KV) der verschiedenen Arbeitsergebnisparameter, wobei die Ziel-Einstellwert-Ermittlungseinrichtung dazu eingerichtet ist, zur Bestimmung des Ziel-Einstellwerts (ZG, ZO, ZU) des Steuerparameters Extrema (RM, KM, VM) und/oder Wendepunkte der Arbeitsergebnis-Kennlinien (KR, KK, KV) zu ermitteln und gemäß einer vorgegebenen Regel zu verknüpfen, und bei einer Verknüpfung das Extremum (RM, KM, VM) und/oder der Wendepunkt zumindest einer der Arbeitsergebnis-Kennlinien (KR, KK, KV) mit einem Offset-Wert (OK, OV) zu beaufschlagen, wobei durch den Offset-Wert (OK, OV) eine Gewichtung verschiedener Arbeitsergebnis-Kennlinien (KR, KK, KV) zueinander erfolgt,

- und einem Steuerparameterausgang (35, 36, 37) zur Ansteuerung des Arbeitsaggregats (10) auf Basis des ermittelten Ziel-Einstellwerts (ZG, ZO, ZU) und/oder um den ermittelten Ziel-Einstellwert (ZG, ZO, ZU) einem Bediener zur Auswahl für die Ansteuerung des Arbeitsaggregats (10) anzubieten.

**20.** Steuereinrichtung nach Anspruch 19, **gekennzeichnet durch** eine Terminalschnittstelle (34) zum Anschluss an ein Bedienerterminal (40) zur Erfassung von Vorgabewerten (VW) für eine Ermittlung eines Ziel-Einstellwerts (ZG, ZO, ZU).

**21.** Erntemaschine (1), insbesondere Mähdrescher, mit einer Steuereinrichtung (30) nach Anspruch 19 oder 20.

**22.** Computerprogrammprodukt, welches direkt in einen Speicher einer programmierbaren Steuereinrichtung (30) einer Erntemaschine (1) ladbar ist, mit Programmcode-Mitteln, um alle Schritte eines Verfahrens nach einem der Ansprüche 1 bis 18 auszuführen, wenn das Programmprodukt in der Steuereinrichtung (30) ausgeführt wird.

## Claims

**1.** A method of determining a target setting value (ZG, ZO, ZU) adapted to a harvesting process for a control parameter (SG, SO, SU) of a working assembly (10) of a harvesting machine (1),
wherein respective working result characteristic curves (KR, KK, KV) are determined for a plurality of different working result parameters in dependence on the control parameter (SG, SO, SU) in question and
based on a combination of the determined working result characteristic curves (KR, KK, KV) the target setting value (ZG, ZO, ZU) of the control parameter (SG, SO, SU) is ascertained,
wherein for ascertaining the target setting value (ZG, ZO, ZU) of the control parameter extreme values (RM, KM, VM) and/or inflection points of the working result characteristic curves (KR, KK, KV) are determined and interlinked in accordance with a predetermined rule and in an interlinking operation the extreme value (RM, KM, VM) and/or the inflexion point of at least one of the working result characteristic curves (KR, KK, KV) is acted upon with an offset value (OK, OV), wherein weighting of various working result characteristic curves (KR, KK, KV) relative to each other is effected by the offset value (OK, OV).

**2.** A method according to claim 1 **characterised in that** for determining a working result characteristic curve (KR, KK, KV) in relation to a number of different setting values of the control parameter (SG, SO, SU) working result measurement values (MR, MK, MV) are detected and a mathematical function is adapted to the working result measurement values (MR, MK, MV).

**3.** A method according to claim 2 **characterised in that** the working result measurement values (MR, MK, MV) are subjected to regression analysis to determine an adapted mathematical function.

**4.** A method according to one of claims 1 to 3 **characterised in that** a presetting value (VW) is taken into consideration when determining a target setting value.

**5.** A method according to one of claims 1 to 4 **characterised in that** to ascertain the target setting value (ZG, ZO, ZU) of the control parameter firstly respective characteristic curve-specific target setting values (ZR, ZK, ZV) and/or characteristic curve-specific target setting ranges are determined for the individual working result characteristic curves (KR, KK, KV) and interlinked in accordance with a predetermined rule.

6. A method according to claim 1 **characterised in that** for ascertaining the target setting value (ZG, ZO, ZU) of the control parameter a mean value is formed from the characteristic curve-specific target setting values (ZR, ZK, ZV) or the extreme values (RM, KM, VM) and/or inflection points of the working result characteristic curves (KR, KK, KV).

7. A method according to claim 6 **characterised in that** the offset value (OK, OV) is selected in dependence on a gradient of the working result characteristic curve (KR, KK, KV) **in that** region.

8. A method according to claim 5 and according to claim 7 **characterised in that** the offset value is selected in dependence on the presetting value (VW).

9. A method according to one of claims 1 to 8 **characterised in that** the working assembly (10) includes a cleaning device (10) and the working result characteristic curves (KR, KK, KV) include separation characteristic curves for the cleaning losses and/or the grain tailings and/or the volume tailings.

10. A method according to claim 9 **characterised in that** a blower rotary speed (SG) and/or an upper sieve opening width (SO) of the cleaning device (10) are set on the basis of separation characteristic curves (KR, KK, KV) for the cleaning losses, the grain tailings and the volume tailings.

11. A method according to claim 9 or claim 10 **characterised in that** a lower sieve opening width (SU) of the cleaning device (10) is set on the basis of separation characteristic curves (KK, KV) for the grain tailings and the volume tailings.

12. A method according to one of claims 2 to 11 **characterised in that** to detect a working result measurement value (MR, MK, MV) the crop conditions are kept constant over a predetermined measurement period within a given tolerance range.

13. A method according to one of claims 2 to 12 **characterised in that** measurement of a working result measurement value (MR, MK, MV) is automatically interrupted when the harvesting machine (1) passes out of a crop stand and is automatically re-started after the harvesting machine passes into the crop stand.

14. A method of controlling a working assembly of a harvesting machine **characterised in that** firstly a target setting value (ZG, ZO, ZU) for a control parameter (SG) of the working assembly (10) is determined in accordance with one of claims 1 to 13 and then the working assembly (10) is actuated on the basis of the determined target setting value (ZE).

15. A method according to claim 14 **characterised in that** target setting values (ZG, ZO, ZU) for various control parameters (SG, SO, SU) of the working assembly (10) are successively determined, wherein after an operation of determining a target setting value (ZG) for a first control parameter (SG) the working assembly (10) is actuated on the basis of the determined target setting value (ZG) and then a target setting value (ZO) is determined for a further control parameter (SO) of the working assembly (10).

16. A method according to claim 15 **characterised in that** the working assembly (10) includes a cleaning device (10) and that in a first step a target setting value (ZG) is determined for a blower rotary speed (SG), in a second step a target setting value (ZO) is determined for an upper sieve opening width (SO) and in a third step a target setting value (ZU) is determined for a lower sieve opening width (SU) of the cleaning device (10).

17. A method according to one of claims 14 to 16 **characterised in that** after a given period of time and/or when a predetermined event occurs a new target setting value (ZG, ZO, ZU) is determined for a control parameter (SG, SO, SU) of a working assembly (10) and the working assembly (10) is actuated on the basis of the new setting value.

18. A method according to claim 17 **characterised in that** the event includes a change in a crop material throughput and/or a variation in settings of other control parameters and/or a change in a crop material parameter.

19. A control device (30) for the actuation of a working assembly (10) of a harvesting machine (1) comprising

- a number of measurement value inputs (31, 32, 33) for detecting working result measurement values (MR, MK, MV) of various working result parameters of the working assembly (10),

- a characteristic curve calculating device (38) for determining working result characteristic curves (KR, KK, KV) for the various working result parameters, which are respectively based on a number of working result measurement values (MR, MK, MV), which are detected at various setting values of a given control parameter (SG, SO, SU) of the working assembly (10), of the working result parameter in question,

- a target setting value determining device (39) for determining a target setting value (ZG, ZO, ZU) adapted to a harvesting process for the control parameter (SG, SO, SU) based on a combination of the determined working result characteristic curves (KR, KK, KV) of the various working result parameters, wherein for ascertaining the target setting value (ZG, ZO, ZU) of the control parameter the target setting value determining device is adapted to determine extreme values (RM, KM, VM) and/or inflection points of the working result characteristic curves (KR, KK, KV) and interlink same in accordance with a predetermined rule and in an interlinking operation to act upon the extreme value (RM, KM, VM) and/or the inflexion point of at least one of the working result characteristic curves (KR, KK, KV) with an offset value (OK, OV), wherein weighting of various working result characteristic curves (KR, KK, KV) relative to each other is effected by the offset value (OK, OV), and

- a control parameter output (35, 36, 37) for the actuation of the working assembly (10) on the basis of the determined target setting value (ZG, ZO, ZU) and/or to offer the determined target setting value (ZG, ZO, ZU) to an operator for selection for actuation of the working assembly (10).

20. A control device according to claim 19 **characterised by** a terminal interface (34) for connection to an operator terminal (40) for detecting presetting values (VW) for determining a target setting value (ZG, ZO, ZU).

21. A harvesting machine (1), in particular a combine harvester, comprising a control device (30) according to claim 19 or claim 20.

22. A computer program product which is loadable directly into a memory of a programmable control device (30) of a harvesting machine (1), with program code means for executing all steps of a method according to one of claims 1 to 18 when the program product is executed in the control device (30).


**Revendications**

1. Procédé pour déterminer une valeur de consigne (ZG, ZO, ZU), adaptée à un processus de récolte, pour un paramètre de commande (SG, SO, SU) d'un organe de travail (10) d'une machine de récolte (1), selon lequel
on détermine des courbes caractéristiques de résultat de travail (KR, KK, KV) respectivement pour plusieurs paramètres de résultat de travail différents, en fonction du paramètre de commande (SG, SO, SU) concerné,
et, sur la base d'une combinaison des courbes caractéristiques de résultat de travail (KR, KK, KV) déterminées, on détermine la valeur de consigne (ZG, ZO, ZU) du paramètre de commande (SG, SO, SU),
sachant que pour déterminer la valeur de consigne (ZG, ZO, ZU) du paramètre de commande, on détermine des extremums (RM, KM, VM) et/ou des points d'inflexion des courbes caractéristiques de résultat de travail (KR, KK, KV) et on les combine conformément à une règle prédéfinie, et, lors d'une combinaison, on applique une valeur de décalage (OK, OV) à l'extremum (RM, KM, VM) et/ou au point d'inflexion d'au moins une des courbes caractéristiques de travail (KR, KK, KV), la valeur de décalage (OK, OV) ayant pour effet une pondération de différentes caractéristiques de travail (KR, KK, KV) les unes par rapport aux autres.

2. Procédé selon la revendication 1, **caractérisé par le fait que** pour déterminer une caractéristique de résultat de travail (KR, KK, KV), on recueille des valeurs mesurées de résultat de travail (MR, MK, MV) pour un certain nombre de valeurs réglées différentes du paramètre de commande (SG, SO, SU) et on adapte une fonction mathématique aux valeurs mesurées de résultat de travail (MR, MK, MV).

3. Procédé selon la revendication 2, **caractérisé par le fait que** pour déterminer une fonction mathématique adaptée, les valeurs mesurées de résultat de travail (MR, MK, MV) sont soumises à une analyse de régression.

4. Procédé selon une des revendications 1 à 3, **caractérisé par le fait que** la détermination d'une valeur de consigne prend en compte une valeur prédéfinie (VW).

5. Procédé selon une des revendications 1 à 4, **caractérisé par le fait que** pour déterminer la valeur de consigne (ZG, ZO, ZU) du paramètre de commande, on détermine d'abord respectivement des valeurs de consigne spécifiques de caractéristique (ZR, ZK, ZV) et/ou des plages de consigne spécifiques de caractéristique pour les différentes caractéristiques de résultat de travail (KR, KK, KV) et on les combine selon une règle prédéfinie.

**6.** Procédé selon la revendication 1, **caractérisé par le fait que** pour déterminer la valeur de consigne (ZG, ZO, ZU) du paramètre de commande, on calcule une valeur moyenne à partir des valeurs de consigne spécifiques de caractéristique (ZR, ZK, ZV) ou des extremums (RM, KM, VM) et/ou des points d'inflexion des caractéristiques de travail (KR, KK, KV).

**7.** Procédé selon la revendication 6, **caractérisé par le fait que** la valeur de décalage (OK, OV) est choisie en fonction d'une pente de la caractéristique de résultat de travail (KR, KK, KV) dans cette zone.

**8.** Procédé selon la revendication 5 et selon la revendication 7, **caractérisé par le fait que** la valeur de décalage est choisie en fonction de la valeur prédéfinie (VW).

**9.** Procédé selon une des revendications 1 à 8, **caractérisé par le fait que** l'organe de travail (10) comprend un dispositif de nettoyage (10) et que les caractéristiques de résultat de travail (KR, KK, KV) englobent des caractéristiques de séparation pour les pertes au nettoyage et/ou le retour de grains et/ou le retour de volume.

**10.** Procédé selon la revendication 9, **caractérisé par le fait que** l'on règle une vitesse de soufflerie (SG) et/ou une ouverture de grille supérieure (SO) du dispositif de nettoyage (10), sur la base de caractéristiques de séparation (KR, KK, KV) pour les pertes au nettoyage, le retour de grains et le retour de volume.

**11.** Procédé selon la revendication 9 ou 10, **caractérisé par le fait que** l'on règle une ouverture de grille inférieure (SU) du dispositif de nettoyage (10), sur la base de caractéristiques de séparation (KK, KV) pour le retour de grains et le retour de volume.

**12.** Procédé selon une des revendications 2 à 11, **caractérisé par le fait que** pour recueillir une valeur mesurée de résultat de travail (MR, MK, MV), les conditions de récolte sont maintenues constantes pendant un intervalle de mesure prédéterminé, dans une plage de tolérance définie.

**13.** Procédé selon une des revendications 2 à 12, **caractérisé par le fait qu'**une mesure d'une valeur de résultat de travail (MR, MK, MV) est interrompue automatiquement, si la machine de récolte (1) sort d'une zone de plantes à récolter, et reprend automatiquement lorsque la machine est de nouveau entrée dans la zone de plantes à récolter.

**14.** Procédé de commande d'un organe de travail d'une machine de récolte, **caractérisé par le fait que** l'on détermine d'abord une valeur de consigne (ZG, ZO, ZU) pour un paramètre de commande (SG) de l'organe de travail (10), selon une des revendications 1 à 13, et que l'on active ensuite l'organe de travail (10) sur la base de cette valeur de consigne (ZE) déterminée.

**15.** Procédé selon la revendication 14, **caractérisé par le fait que** l'on détermine successivement des valeurs de consigne (ZG, ZO, ZU) pour différents paramètres de commande (SG, SO, SU) de l'organe de travail (10), et après la détermination d'une valeur de consigne (ZG) pour un premier paramètre de commande (SG), on active l'organe de travail (10) sur la base de cette valeur de consigne (ZG) déterminée, puis on détermine une valeur de consigne (ZO) pour un autre paramètre de commande (SO) de l'organe de travail (10).

**16.** Procédé selon la revendication 15, **caractérisé par le fait que** l'organe de travail (10) comprend un dispositif de nettoyage (10) et que l'on détermine, lors d'une première étape, une valeur de consigne (ZG) pour une vitesse de soufflerie (SG) et, lors d'une deuxième étape, une valeur de consigne (ZO) pour une ouverture de grille supérieure (SO) et, lors d'une troisième étape, une valeur de consigne (ZU) pour une ouverture de grille inférieure (SU) du dispositif de nettoyage (10).

**17.** Procédé selon une des revendications 14 à 16, **caractérisé par le fait qu'**après un laps de temps défini et/ou lors de la survenue d'un événement prédéterminé, une nouvelle valeur de consigne (ZG, ZO, ZU) est déterminée pour un paramètre de commande (SG, SO, SU) d'un organe de travail (10) et que ledit organe de travail (10) est activé sur la base de la nouvelle valeur réglée.

**18.** Procédé selon la revendication 17, **caractérisé par le fait que** l'événement englobe une modification d'un débit de produits récoltés et/ou une modification de réglages d'autres paramètres de commande et/ou une modification d'un paramètre du produit récolté.

**19.** Système de commande (30) pour activer un organe de travail (10) d'une machine de récolte (1), comprenant

- un certain nombre d'entrées de valeurs mesurées (31, 32, 33) pour recueillir des valeurs mesurées de résultat de travail (MR, MK, MV) de différents paramètres de résultat de travail de l'organe de travail (10);

- un dispositif de calcul de caractéristiques (38) pour déterminer des caractéristiques de résultat de travail (KR, KK, KV) pour les différents paramètres de résultat de travail, qui se basent respectivement sur un certain nombre de valeurs mesurées de résultat de travail (MR, MK, MV) du paramètre de résultat de travail concerné, recueillies pour des valeurs réglées différentes d'un paramètre de commande (SG, SO, SU) précis de l'organe de travail (10);

- un dispositif de détermination de valeurs de consigne (39) pour déterminer une valeur de consigne (ZG, ZO, ZU) du paramètre de commande (SG, SO, SU) qui soit adaptée au processus de récolte, sur la base d'une combinaison des caractéristiques de résultat de travail (KR, KK, KV) déterminées pour les différents paramètres de résultat de travail, sachant que le dispositif de détermination de valeurs de consigne est conçu, dans le but de déterminer la valeur de consigne (ZG, ZO, ZU) du paramètre de commande, pour déterminer des extremums (RM, KM, VM) et/ou des points d'inflexion des courbes caractéristiques de résultat de travail (KR, KK, KV) et pour les combiner conformément à une règle prédéfinie, et, lors d'une combinaison, pour appliquer une valeur de décalage (OK, OV) à l'extremum (RM, KM, VM) et/ou au point d'inflexion d'au moins une des courbes caractéristiques de travail (KR, KK, KV), la valeur de décalage (OK, OV) ayant pour effet une pondération de différentes caractéristiques de travail (KR, KK, KV) les unes par rapport aux autres.

- et une sortie de paramètre de commande (35, 36, 37) pour activer l'organe de travail (10) sur la base de la valeur de consigne (ZG, ZO, ZU) déterminée et/ou pour proposer la valeur de consigne (ZG, ZO, ZU) déterminée à un opérateur, en vue de la sélection pour l'activation de l'organe de travail (10).

20. Système de commande selon la revendication 19, **caractérisé par le fait qu'**il comprend une interface de terminal (34) pour une connexion à un terminal d'utilisateur (40), en vue de la saisie de valeurs prédéfinies (VW) pour déterminer une valeur de consigne (ZG, ZO, ZU).

21. Machine de récolte (1), en particulier moissonneuse-batteuse, comprenant un système de commande (30) selon la revendication 19 ou 20.

22. Programme d'ordinateur qui peut être chargé directement dans une mémoire d'un système de commande (30) programmable d'une machine de récolte (1), comprenant des moyens constituant des codes de programme pour exécuter toutes les étapes d'un procédé selon une des revendications 1 à 18, lorsque le programme est exécuté dans le système de commande (30).

Fig. 1

23

EP 1 704 767 B2

Fig.2

Fig.3

Fig.4

24

Fig.5

EP 1 704 767 B2

Fig.6

26

Fig.7

EP 1 704 767 B2

Fig.8

Optimierung Gebläsedrehzahl

Fig.9

Optimierung Obersieb

Fig.11

EP 1 704 767 B2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10147733 A1